# EUROPEAN PATENT APPLICATION

(11) **EP 4 600 114 A1**
(43) Date of publication of application: **13.08.2025**
(21) Application number: 23884065.6
(22) Date of filing: 03.04.2023
(51) Int. Cl.: B62B 7/12, B62B 7/00, B60N 2/28, A47D 13/02

(54) **BABY TRANSPORT**

(30) Priority: 02.11.2022 CN 202211361618
(71) Applicant: Sunnylove Baby Products Zhuhai Co., Ltd, Zhuhai, Guangdong 519090 (CN)
(72) Inventor: LIU, Xiuping, Zhuhai, Guangdong 519015 (CN)
(74) Representative: Torggler & Hofmann Patentanwälte - Innsbruck
(86) International application number: PCT/CN2023/085956
(87) International publication number: WO 2024/093122

(57) **Abstract**

Provided is a child carrier, including: a carrier body (1), having a backrest assembly and a seat plate; a rear joint assembly, arranged on the carrier body (1);a front leg assembly (3), an end of the front leg assembly (3) away from ground being rotatably connected to the seat plate; a connecting rod assembly (4), an end of the connecting rod assembly (4) being connected to the front leg assembly (3) and another end of the connecting rod assembly (4) being connected to the rear joint assembly; a rear leg assembly (2), connected to the rear joint assembly and rotatable relative to the connecting rod assembly (4); and a chute assembly, arranged on the backrest assembly, the rear joint assembly being slidingly connected to the chute assembly to switch the child carrier between a first state and a second state; wherein the backrest assembly, the seat plate and the connecting rod assembly (4) form a triangle in the first state of the child carrier; and the seat plate, the front leg assembly (3) and the connecting rod assembly (4) form a triangle in the second state of the child carrier.

## Description

### Cross-Reference to Related Application

This application is based on and claims priority to Chinese patent application No. 202211361618.1, filed on November 2, 2022, the contents of which are incorporated herein by reference in its entirety.

### Field of the Invention

The present disclosure relates to the field of safety travel articles for children, in particular to a child carrier such as a child safety seat or baby stroller or infant stroller.

### Background of the Invention

To facilitate child safety seats (especially baby carriers) being used to travel with infants, most of the child safety seats in related art are used in outdoor scenarios by assembling a seat body and a frame to form a stroller to be pushed on the ground, and during use in an automobile, the seat body is detached from the frame and mounted on an automobile seat for use.

### Summary of the Invention

Through research, the inventors found that in related art, a child carrier that meets the requirement of traveling outside is heavy, inconvenient for a user to carry, and inconvenient for operation of switching to pushing rapidly and folding and storing rapidly.

In view of this, embodiments of the present disclosure provide a child carrier, which is capable of allowing to use a lighter structure to meet the use requirements such as easy carrying, easy folding, easy pushing and easy storage.

According to one aspect of the present disclosure, a child carrier is provided and includes:
a carrier body, having a backrest assembly and a seat plate;
a rear joint assembly, arranged on the carrier body;
a front leg assembly, an end of the front leg assembly away from ground being rotatably connected to the seat plate;
a connecting rod assembly, an end of the connecting rod assembly being connected to the front leg assembly and another end of the connecting rod assembly being connected to the rear joint assembly;
a rear leg assembly, connected to the rear joint assembly and rotatable relative to the connecting rod assembly; and
a chute assembly, arranged on the backrest assembly, the rear joint assembly being slidingly connected to the chute assembly to switch the child carrier between a first state and a second state;
wherein the backrest assembly, the seat plate and the connecting rod assembly form a triangle in the first state of the child carrier; and
the seat plate, the front leg assembly and the connecting rod assembly form a triangle in the second state of the child carrier.

In some embodiments, in the first state of the child carrier, the rear joint assembly is located at an end of the chute assembly away from the ground, the front leg assembly abuts against the seat plate, and the rear leg assembly abuts against the backrest assembly; and
in the second state of the child carrier, the rear joint assembly is located at an end of the chute assembly close to the ground, and the front leg assembly and the rear leg assembly are configured to serve as a ground support when connected with a wheel set.

In some embodiments, the child carrier in the first state is a child safety seat so as to be mounted at an automobile seat or be in clamping connection with a separate automobile base for use; and
the child carrier in the second state is a stroller so as to be pushed on the ground.

In some embodiments, the front leg assembly is configured to drive the rear leg assembly by the connecting rod assembly to slide on the chute assembly in the process of switching the first state to the second state of the child carrier.

In some embodiments, the rear joint assembly has a locking member and a rear joint cover, the locking member is slidably arranged in the rear joint cover in an axial direction of the rear joint cover, and the rear leg assembly is connected to the rear joint cover; and the chute assembly has a first chute and a second chute, a length direction of the first chute and a length direction of the second chute are intersected, and the locking member and the rear joint cover are respectively slidingly connected to the first chute and the second chute.

In some embodiments, a distance between the first chute and the second chute is increased gradually in a direction away from the ground, so that the rear leg assembly swings forward while moving upward along with the rear joint assembly.

In some embodiments, the backrest assembly has a sliding low-point mounting slot which is arranged adjacent to an end of the chute assembly close to the ground.

The child carrier further includes:
a first locking mechanism, connected to the locking member and configured to adjust a relative position of the locking member and the rear joint cover in the axial direction of the rear joint cover so as to switch the rear joint cover between a low-point locked state and a low-point unlocked state;
wherein in the low-point locked state of the rear joint cover, the locking member is configured to limit rotation and sliding of the rear joint cover relative to the carrier body; and
in the low-point unlocked state of the rear joint cover, the rear joint cover is capable of rotating and/or sliding relative to the carrier body.

In some embodiments, the child carrier further includes:
a first unlocking member;
the first locking mechanism includes:
   a jacking block, having an inclined groove and abutting against the locking member;
   a pulling block, connected to the first unlocking member through a first cable and slidingly connected to the jacking block through the inclined groove; and
   a first reset element, arranged between an end of a cord and the pulling block;
   wherein in the low-point locked state of the rear joint cover, the locking member is located between the sliding low-point mounting slot and the rear joint cover in the axial direction of the rear joint cover; and
   the pulling block is configured to move along with operation of the first unlocking member to drive the jacking block to push the locking member to deviate from the sliding low-point mounting slot in the axial direction of the rear joint cover and retract into the rear joint cover to unlock the rear joint cover.

In some embodiments, the front foot assembly includes:
two front leg rods, respectively hinged to two sides of the carrier body, an end of the front leg rod close to the ground being connected to a front wheel group; and
a first crossbar, connected between the two front leg rods; and
wherein the seat plate has a second groove, and the second groove is formed at the bottom of the seat plate, so that in the first state of the child carrier, the first crossbar is folded in the second groove.

In some embodiments, the child carrier further includes:
a second locking mechanism, arranged on a groove wall of the second groove, so that the first crossbar is switched between a locked state and an unlocked state;
wherein in the locked state of the first crossbar, the second locking mechanism is configured to limit the first crossbar within the second groove; and
in the unlocked state of the first crossbar, the first crossbar is capable of deviating from the second groove.

In some embodiments, the child carrier further includes:
a first unlocking member;
the second locking mechanism includes:
   a crossbar locking clamping pin, connected to the first unlocking member through a second cable; and
   a second reset element, arranged between an end of the second cable and the crossbar locking clamping pin;
   wherein in the locked state of the first crossbar, the crossbar locking clamping pin extends out relative to a groove wall of the second groove to limit a movement of the first crossbar; and
   the crossbar locking clamping pin is configured to retract into the groove wall of the second groove along with operation of the first unlocking member to unlock the first crossbar.

In some embodiments, the first crossbar has a force-bearing block, so that the force-bearing block is flush with a bottom surface of the seat plate in the first state of the child carrier.

In some embodiments, the seat plate and the backrest assembly are fixedly connected or integrally formed, and the connecting rod assembly is a connecting rod assembly with a fixed length.

In some embodiments, the seat plate and the back plate assembly are rotatably connected;
wherein the connecting rod assembly has a first connecting rod and a second connecting rod, and the second connecting rod is sleeved in the first connecting rod and is capable of sliding relative to the first connecting rod, so that a length of the connecting rod assembly is adjustable.

In some embodiments, the child carrier further has a third state,
wherein in the third state of the child carrier, a front surface of the backrest assembly and an upper surface of the seat plate are opposite to each other, and are at an acute angle or parallel; the second connecting rod retracts into the first connecting rod; the front leg assembly abuts against the seat plate; and the rear leg assembly abuts against the backrest assembly.

In some embodiments, the third state is a smallest folded state of the child carrier.
In some embodiments, the backrest assembly has a first cavity, and the seat plate has a second cavity;
wherein the child carrier further includes:
   a third locking mechanism, slidably arranged in the first cavity and the second cavity and configured to switch the backrest assembly between a rotation locked state and a rotation unlocked state;
   wherein in the rotation locked state of the backrest assembly, a mouth of the first cavity is docked with a mouth of the second cavity, and the third locking mechanism is configured to limit the relative rotation of the backrest assembly and the seat plate; and
   in the rotation unlocked state of the backrest assembly, the mouth of the first cavity is separated from the mouth of the second cavity, and the backrest assembly is configured to rotate relative to the seat plate.

In some embodiments, wherein the third locking mechanism includes:
a backrest locking clamping pin, connected to the unlocking handle through a third cable; and
a third reset element, connected between a first end of the backrest locking clamping pin and a first end of the second cavity away from the mouth of the second cavity;
wherein in the rotation locked state of the backrest assembly, a second end of the backrest locking clamping pin abuts against a second end of the first cavity away from the mouth of the first cavity, and the first end of the backrest locking clamping pin is located in the second cavity;
wherein the child carrier further includes:
   an unlocking handle, arranged on the seat plate;
   wherein the backrest locking clamping pin third cables configured to move towards the first end of the second cavity along with rotation of the unlocking handle to deviate from the first cavity, so that the backrest assembly is in the rotation unlocked state.

In some embodiments, the child carrier further includes:
a fourth locking mechanism, arranged on the connecting rod assembly;
wherein in a locked state of the connecting rod assembly, the fourth locking mechanism is configured to limit a relative movement of the first connecting rod and the second connecting rod; and
in an unlocked state of the connecting rod assembly, the first connecting rod and the second connecting rod are capable of being telescopic relatively.

In some embodiments, the fourth locking mechanism includes:
a fixing seat, comprising a support strip, where a first end of the support strip has a sliding long groove, a second end of the support strip has an accommodating groove, the first end of the support strip is provided with a first sleeve section, the first sleeve section communicates with the sliding long groove, the second end of the support strip is provided with a second sleeve section, the second sleeve section communicates with the accommodating groove, and the first sleeve section and the second sleeve section are sleeved on the first connecting rod;
a connecting rod clamping pin, arranged in the accommodating groove; and
a fourth reset element, arranged between the accommodating groove and the connecting rod clamping pin;
wherein in the locked state of the connecting rod assembly, the fourth reset element is configured to keep the connecting rod clamping pin at a locked position passing through a first through hole in the first connecting rod and a second through hole in the second connecting rod.

In some embodiments, the child carrier further includes:
an unlocking handle, arranged on the seat plate;
an unlocking pulling block and an unlocking jacking block, arranged in the seat plate, where the unlocking pulling block is connected to a third cable connecting the unlocking handle, so that the unlocking pulling block is driven through rotation of the unlocking handle to push the unlocking jacking block to extend out; and
an unlocking strip, slidably arranged between the fixing seat and the first connecting rod, where two ends of the unlocking strip are respectively provided with a first wedge block and a second wedge block, the first wedge block passes through the sliding long groove and abuts against the unlocking jacking block, and an inclined surface of the second wedge block is slidably connected to the connecting rod clamping pin; and
wherein the unlocking jacking block is configured to, push the first wedge block to make the unlocking strip slide in a direction parallel to the first connecting rod when extending out; the second wedge block is configured to push the connecting rod clamping pin through the inclined surface to retract into the accommodating groove so as to deviate from the locked position passing through the through hole in the first connecting rod and the through hole in the second connecting rod when the unlocking strip slides.

In some embodiments, the connecting rod assembly includes:
a damping clamping groove, arranged in the second connecting rod; and
a connecting rod clamping pin, arranged in the damping clamping groove and configured to move relative to the damping clamping groove;
wherein in the locked state of the connecting rod assembly, the connecting rod clamping pin is embedded into the damping clamping groove and configured to limit a relative movement of the first connecting rod and the second connecting rod; and
the connecting rod clamping pin is configured to deviate from the damping clamping groove when being subjected to a preset external force, so that the first connecting rod and the second connecting rod are capable of being relatively telescopic.

In some embodiments, the backrest assembly has:
a sliding high-point mounting slot, arranged adjacent to an end of the chute assembly away from the ground; and
the child carrier further includes:
   a fifth locking mechanism, movably connected to the sliding high-point mounting slot to switch the rear joint cover between a high-point locked state and a high-point unlocked state;
   wherein in the high-point locked state of the rear joint cover, the fifth locking mechanism limits the rear joint cover and/or the locking member from sliding along the chute assembly to an end close to the ground; and
   in the high-point unlocked state of the rear joint cover, the rear joint cover and/or the locking member are capable of sliding along the chute assembly.

In some embodiments, the child carrier further includes:
a second unlocking member, where two ends of the second unlocking member have inclined grooves;
wherein the fifth locking mechanism includes:
   a high-point clamping pin pulling block, slidably connected to the second unlocking member along the inclined grooves of the second unlocking member; and
   a high-point clamping pin, abutting against the high-point clamping pin pulling block;
   wherein in the high-point locked state of the rear joint cover, the high-point clamping pin extends out relative to the sliding high-point mounting slot to limit the rear joint cover and/or the locking member from sliding towards a direction close to the ground; and
   the high-point clamping pin pulling block is configured to move along the spout with operation of the second unlocking member to pull the high-point clamping pin to retract into the sliding high-point mounting slot, so that the rear joint cover and/or the locking member are capable of sliding along the chute assembly.

In some embodiments, a side surface of the backrest assembly is provided with a side board, a lower side of the side board is provided with a folding clamping slot, and a side surface of the seat plate is provided with a folding locking clamping pin;
wherein in a folding locked state of the backrest assembly, the folding locking clamping pin is buckled in the folding clamping slot to limit a relative movement of the seat plate and the backrest assembly; and
in a folding unlocked state of the backrest assembly, the folding locking clamping pin deviates from the folding clamping slot.

In some embodiments, the child carrier further includes:
a first unlocking member, connected to the folding locking clamping pin through a sixth cable, or fixedly connected to the folding locking clamping pin through a crossbar locking clamping pin;
wherein the folding locking clamping pin is configured to deviate from the folding clamping slot along with operation of the first unlocking member.

In some embodiments, the backrest assembly has:
an adjustable backrest, rotatably connected to the seat plate; and
two side edge structures, , respectively arranged on two sides of the adjustable backrest.

In some embodiments, the adjustable backrest is adjustable relative to the angle of each of an side edge structures;
a side of each of the side edge structures close to the adjustable backrest has a plurality of backrest-adjusting fixed grooves, and the plurality of backrest-adjusting fixed grooves correspond to different angles of the adjustable backrest; and
the adjustable backrest has a backrest-locking clamping pin, and the backrest-locking clamping pin is configured to be inserted into one of the plurality of backrest-adjusting fixed grooves respectively to make the adjustable backrest and the seat plate form different included angles.

In some embodiments, the child carrier further includes:
a second unlocking member, connected to the backrest-locking clamping pin through a seventh cable;
wherein the backrest-locking clamping pin is configured to deviate from the backrest-adjusting fixed grooves along with operation of the second unlocking member.

In some embodiments, the child carrier further includes:
a handle headrest assembly, having a headrest and a sliding rod, where the headrest is connected to the sliding rod, the sliding rod is inserted into the backrest assembly, and a relative distance of the headrest and the backrest assembly is adjustable.

In some embodiments, the child carrier further includes:
a first handle, rotatably connected to a rear surface of the headrest.

In some embodiments, the rear leg assembly has two rear leg rods, respectively arranged on two sides of the carrier body, and one end of the rear leg assembly close to the ground is connected to a rear wheel group;
a second crossbar, arranged between the two rear leg rods ;
wherein the backrest assembly has a third groove formed on a rear surface of the backrest assembly, so that the second crossbar is folded in the third groove in the first state of the child carrier.

In some embodiments, the first unlocking member is arranged on a rear surface of the backrest assembly.

In some embodiments, a second unlocking member is arranged on a rear surface of the backrest assembly.

Therefore, according to the embodiments of the present disclosure, two stable triangular supporting and force-bearing structures are capable of sharing an impact force of the original force-bearing structure of the carrier body respectively, thereby ensuring the light weight of the child carrier while increasing the state-switching function and meeting the structural strength. A locking point of the force-bearing structure is capable of being converted rapidly only through the sliding and rotation of the rear leg assembly on the chute assembly and without additionally increasing the weight of the carrier body, and a stable force-bearing structure in the use state of an automobile seat is rapidly switched into a stable force-bearing structure of a pushable stroller, thereby achieving a higher degree of lightweight on the premise of safe use and providing greater convenience for users to operate.

### Brief Description of the Drawings

The accompanying drawings, which form part of the description, illustrate embodiments of the present disclosure and together with the description, serve to explain the principles of the present disclosure.

The present disclosure can be more clearly understood from the following detailed descriptions with reference to the accompanying drawings, in which:
FIG. 1 is a structural exploded view according to some embodiments of a child carrier of the present disclosure;
FIG. 2(a) is a structural schematic diagram of a second state of a child carrier according to some embodiments of a child carrier of the present disclosure;
FIG. 2(b) is a structural schematic diagram of a first state of a child carrier according to some embodiments of a child carrier of the present disclosure;
FIG. 3(a), FIG. 3(b), FIG. 3(c) and FIG. 3(d) are structural schematic diagrams of a switching process of a first state and a second state of a child carrier according to some embodiments of a child carrier of the present disclosure;
FIG. 4(a) is a structural schematic diagram of a rear leg assembly and a rear joint assembly according to some embodiments of a child carrier of the present disclosure;
FIG. 4(b) is a structural schematic exploded view of a rear joint assembly according to some embodiments of a child carrier of the present disclosure;
FIG. 5(a) is a structural schematic diagram **in** which a first locking mechanism unlocks a rear joint cover according to some embodiments of a child carrier of the present disclosure;
FIG. 5(b) is a structural schematic diagram **in** which a first locking mechanism locks a rear joint cover according to some embodiments of a child carrier of the present disclosure;
FIG. 6(a) is a schematic diagram of a connection relationship of a first locking mechanism and a first unlocking member according to some embodiments of a child carrier of the present disclosure;
FIG. 6(b) is a schematic diagram of structure decomposition of a first locking mechanism according to some embodiments of a child carrier of the present disclosure;
FIG. 7(a) is a structural schematic diagram **in** which a first locking mechanism unlocks a first crossbar according to some embodiments of a child carrier of the present disclosure;
FIG. 7(b) is a structural schematic diagram **in** which a first locking mechanism locks a first crossbar according to some embodiments of a child carrier of the present disclosure;
FIG. 8 is a sectional view of a seat plate according to some embodiments of a child carrier of the present disclosure;
FIG. 9(a) is a three-dimensional schematic diagram of structure decomposition according to some other embodiments of a child carrier of the present disclosure;
FIG. 9(b) is a planar schematic diagram of structure decomposition according to some other embodiments of a child carrier of the present disclosure;
FIG. 10(a) is a structural schematic diagram of a second state of a child carrier according to some other embodiments of a child carrier of the present disclosure;
FIG. 10(b) is a structural schematic diagram of a third state of a child carrier according to some other embodiments of a child carrier of the present disclosure;
FIG. 11(a) is a structural schematic diagram of a second state of a child carrier according to some other embodiments of a child carrier of the present disclosure;
FIG. 11(b) is a structural schematic diagram of a first state of a child carrier according to some other embodiments of a child carrier of the present disclosure;
FIG. 11(c) is a structural schematic diagram of switching between a first state and a second state of a child carrier according to some other embodiments of a child carrier of the present disclosure;
FIG. 11(d) is a structural schematic diagram of a switching process of a third state of a child carrier according to some other embodiments of a child carrier of the present disclosure;
FIG. 12 is a sectional view according to some other embodiments of a child carrier of the present disclosure;
FIG. 13(a) is a structural schematic diagram of an unlocking handle according to some other embodiments of a child carrier of the present disclosure;
FIG. 13(b) is a schematic diagram of structure decomposition of an unlocking handle according to some other embodiments of a child carrier of the present disclosure;
FIG. 14(a) is a structural schematic diagram of a connecting rod assembly according to some other embodiments of a child carrier of the present disclosure;
FIG. 14(b) is a schematic diagram of structure decomposition of a connecting rod assembly according to some other embodiments of a child carrier of the present disclosure;
FIG. 15(a) is a structural schematic diagram in which a connecting rod assembly is in an unlocked state according to some other embodiments of a child carrier of the present disclosure;
FIG. 15(b) is a structural schematic diagram in which a connecting rod assembly is in a locked state according to some other embodiments of a child carrier of the present disclosure;
FIG. 16(a) is a structural schematic diagram of a first unlocking member and a second unlocking member according to some other embodiments of a child carrier of the present disclosure;
FIG. 16(b) is a schematic diagram of structure decomposition of a first unlocking member and a second unlocking member according to some other embodiments of a child carrier of the present disclosure;
FIG. 17(a) is a schematic diagram of structure decomposition according to yet some other embodiments of a child carrier of the present disclosure;
FIG. 17(b) is a structural schematic diagram according to yet some other embodiments of a child carrier of the present disclosure;
FIG. 17(c) is a schematic diagram of a semi-lying state according to yet some other embodiments of a child carrier of the present disclosure;
FIG. 17(d) is a schematic diagram of a full-lying state according to yet some other embodiments of a child carrier of the present disclosure;
FIG. 18(a) is a structural schematic diagram of an adjustable backrest according to yet some other embodiments of a child carrier of the present disclosure; and
FIG. 18(b) is a structural schematic diagram of a side edge structure according to yet some other embodiments of a child carrier of the present disclosure.

The reference numerals of the drawings respectively represent:
a) carrier body; 2. rear leg assembly; 3. front leg assembly; 4. connecting rod assembly; 6. handle headrest assembly; 7. adjustable backrest; 101. first chute; 102. second chute; 103. sliding low-point mounting slot; 104. sliding high-point mounting slot; 105. folding clamping slot; 106. third groove; 107. second groove; 111. first unlocking member; 112. jacking block; 113. pulling block; 114. second unlocking member; 115. first cable; 115-2. second cable; 116. first reset element; 116-2. second reset element; 117-4. sixth cable; 120. backrest-adjusting fixed groove; 121. high-point clamping pin; 122. high-point clamping pin pulling block; 123. first cavity; 124. second cavity; 117-5. seventh cable; 118-3. backrest-adjusting pulling block; 119. backrest-locking clamping pin; 201. first protrusion; 202. second protrusion; 203 and 212. locking members; 211. rear joint cover; 301. first crossbar; 412. unlocking handle; 411. backrest locking clamping pin; 413. unlocking pulling block; 414. unlocking jacking block; 415. crossbar locking clamping pin; 416. folding locking clamping pin; 417. third cable; 418. third reset element; 419. auxiliary block; 501. through hole in first connecting rod; 502. through hole in second connecting rod; 511. first connecting rod; 512. second connecting rod; 513. support strip; 514. connecting rod clamping pin; 515. fourth reset element; 516. fixing seat.

It should be understood that the dimensions of various parts shown in the accompanying drawings are not drawn according to an actual scale relationship. In addition, the same or similar reference signs indicate the same or similar components.

### Detailed Description of the Embodiments

Various exemplary embodiments of the present disclosure will now be described in detail with reference to the accompanying drawings. The descriptions of the exemplary embodiments are merely illustrative and are in no way intended to limit the present disclosure, and application or uses thereof. The present disclosure can be implemented in many different forms and is not limited to the embodiments described herein. These embodiments are provided, so that the present disclosure will be thorough and complete, and will fully convey the scope of the present disclosure to those skilled in the art. It should be noted that unless otherwise specified, the relative arrangement of components and steps, the composition of materials, numerical expressions and numerical values set forth in these embodiments should be interpreted as merely illustrative and not as limitative.

Similar words of "first", "second" and the like used in the present disclosure do not indicate any order, quantity or importance, but are only used to distinguish different parts. Similar words such as "including" or "containing" mean that the elements before the word cover the elements listed after the word, without excluding the possibility of covering other elements. "Upper", "lower", "left", "right" and the like are only used to indicate a relative positional relationship. After the absolute position of a described object changes, the relative positional relationship may also change accordingly.

In the present disclosure, when it is described that a specific device is located between a first device and a second device, there may be an intervening device between the specific device and the first device or the second device or not. When it is described that the specific device is connected to other devices, the specific device may be directly connected to the other devices without the intervening device, and may also have the intervening device without being directly connected to the other devices.

All terms (including technical terms or scientific terms) used in the present disclosure have the same meanings as those understood by ordinary skilled in the art to which the present disclosure belongs, unless otherwise defined particularly. It should also be understood that the terms defined in, for example, general dictionaries should be interpreted as having the meanings consistent with their meanings in the context of the related art, and should not be interpreted in an idealized or extremely formal sense unless explicitly defined herein.

Technologies, methods and equipment known to those skilled in the related art may not be discussed in detail, but the technologies, methods and equipment should be regarded as part of the description under appropriate circumstances.

In related art, an integrally injection-molded child carrier is too heavy, so continuous lightweight is required to facilitate traveling and carrying. The structural weight of the child carrier is mainly concentrated at the intersection of a body seat plate and a backrest, and the only lightweight direction is to reduce the structure at the intersection of the body seat plate and the backrest, but a safety standard test requires high-speed front-rear collision on the safety seat. Therefore, the structural strength at the intersection of the body seat plate and the backrest is required to be high. It is difficult for the child carrier in the related art to reduce the weight of the structure at the intersection of the body seat plate and the backrest on the premise of meeting the regulation testing requirements.

In addition, customers think that an integrally injection-molded body assembly in the related art is too large to be stored and carried out, and hope that the body assembly can be folded to reduce the volume and be stored and carried out more conveniently. To meet the folding requirement, it is necessary to add a folding mechanism and a locking mechanism at the intersection of the body seat plate and the backrest, resulting in the increase of the weight of the independent body assembly.

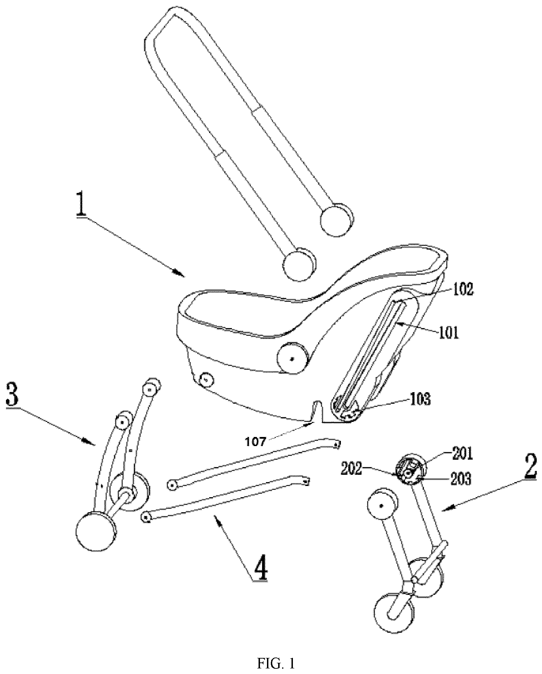

FIG. 1 is a structural exploded view according to some embodiments of a child carrier of the present disclosure. In view of this, according to one aspect of the embodiments of the present disclosure, a child carrier is provided and includes: a carrier body 1, a rear joint assembly, a front leg assembly 3, a connecting rod assembly 4, a rear leg assembly 2 and a chute assembly. The carrier body 1 has a backrest assembly and a seat plate, and the rear joint assembly is arranged on the carrier body 1. One end of the front leg assembly 3 away from the ground is rotatably connected to the seat plate. One end of the connecting rod assembly 4 is connected to the front leg assembly 3, and the other end of the connecting rod assembly 4 is connected to the rear joint assembly. The rear leg assembly 2 is connected to the rear joint assembly and is rotatable relative to the connecting rod assembly 4.

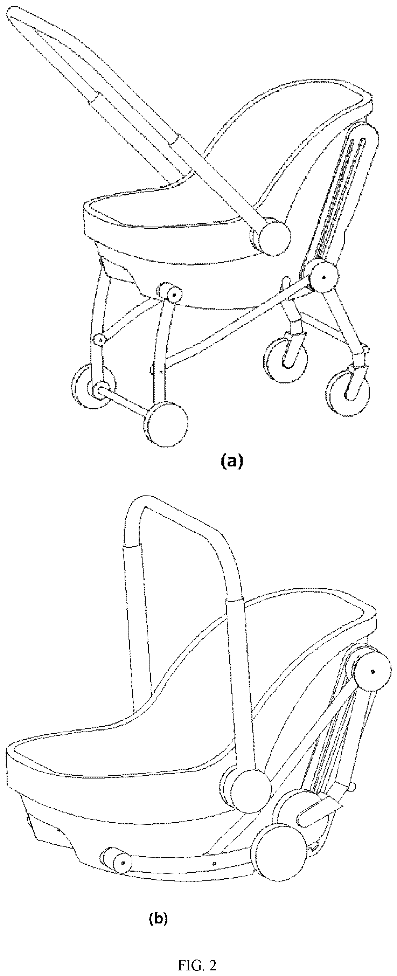

FIG. 2(a) is a structural schematic diagram of a second state according to some embodiments of a child carrier of the present disclosure, and FIG. 2(b) is a structural schematic diagram of a first state according to some embodiments of a child carrier of the present disclosure. Referring to FIG. 2(a) and FIG. 2(b), the chute assembly is arranged on the backrest assembly, and the rear joint assembly is slidingly connected to the chute assembly and is capable of sliding and rotating on the chute assembly, so that the child carrier is switched between the first state and the second state. In the first state, the child carrier is in an unfolded state; and at this time, the backrest assembly, the seat plate and the connecting rod assembly 4 form a triangle, and the connecting rod assembly 4 is supported between the seat plate and the backrest assembly for a triangular supporting structure, so that the resistance back when the backrest assembly is bent forward is effectively increased, a force-bearing structure between the seat plate and the backrest assembly can be greatly simplified, and the weight-reducing effect is achieved. In the second state, the child carrier is in a folded state; and at this time, the seat plate, the front leg assembly 3 and the connecting rod assembly 4 form a triangle, and the seat plate, the front leg assembly 3 and the connecting rod assembly 4 form a triangular supporting structure, so it is unnecessary to add a new structural weight during conversion from an automobile seat mode in the first state to a stroller mode in the second state.

In the first state, a triangular supporting and force-bearing structure formed by the backrest assembly, the seat plate and the connecting rod assembly 4 can simplify a force-bearing structure when the independent carrier body 1 serves as an automobile seat for use, that is, the original force-bearing structure of the carrier body 1 is capable of being subjected to lightweight design and weight reduction, in particular, the force-bearing structure of the carrier body 1 which is required to add a folding mechanism and a locking mechanism is subjected to lightweight design, thereby achieving a significant weight-reducing effect. The triangular supporting and force-bearing structure in the second state is formed by rapidly switching from the first state, so that the front leg assembly and the rear leg assembly 2 of a stably pushed stroller can be unfolded.

In this embodiment, the stable triangular supporting and force-bearing structure in two use states can share an impact force borne by the original force-bearing structure of the carrier body 1 respectively, thereby ensuring the light weight of the carrier while increasing the state switching function and meeting the structural strength. Furthermore, a locking point of the force-bearing structure can be converted rapidly only through the sliding and rotation of the rear leg assembly 2 on the chute assembly and without additionally increasing the weight of the carrier body 1, and a stable force-bearing structure in the use state of an automobile seat is rapidly switched into a stable force-bearing structure of a pushable stroller, thereby achieving a higher degree of lightweight on the premise of safe use and providing greater convenience for users to operate.

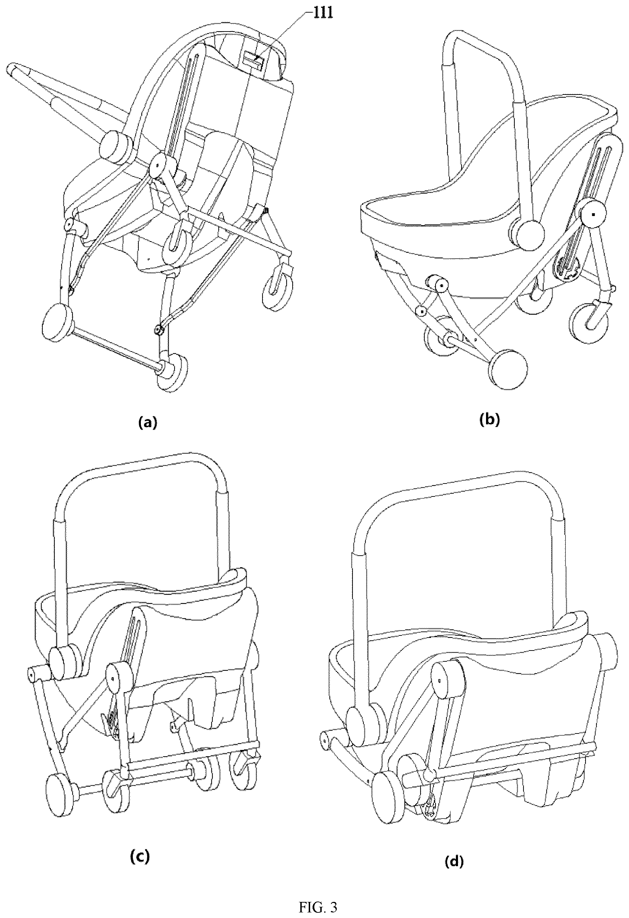

FIG. 3(a), FIG. 3(b), FIG. 3(c) and FIG. 3(d) are structural schematic diagrams of a switching process of a first state and a second state according to some embodiments of a child carrier of the present disclosure. Referring to FIG. 1 to FIG. 3, in some embodiments, in the first state of the child carrier, the rear joint assembly is located at one end of the chute assembly away from the ground, the front leg assembly 3 abuts against the seat plate, and the rear leg assembly 2 abuts against the backrest assembly.

When it is necessary to switch to the stroller mode, a user can release the child carrier from the automobile seat, and the front leg assembly 3 rotates towards the ground under the action of gravity, so that a pull rod is driven to pull the rear joint assembly to slide on the chute assembly towards the ground, and the rear leg assembly 2 is unfolded accordingly. In the second state, the rear joint assembly is located at one end of the chute assembly close to the ground and located at the lowest point position of the chute assembly, the rear joint assembly is located at one end of the chute assembly close to the ground, and the front leg assembly 3 and the rear leg assembly 2 are configured to serve as a ground support when connected with a wheel set.

In this embodiment, the child carrier may be mounted and used in combination with a carrier seat in a motor vehicle,or may be independently pushed and used outside the motor vehicle. The child carrier is portable and easy to fold and carry, thereby significantly improving the safety and the use convenience of traveling with children.

Referring to FIG. 1 to FIG. 3, in some embodiments, the child carrier in the first state is a child safety seat, so that the child carrier is capable of being mounted at the automobile eat or being clamped with a separate automobile base for use; and the child carrier in the second state is a stroller, so that the child carrier is capable of being pushed on the ground. The carrier body may be provided with a handle, so that in the first state, the child carrier can serve as a baby carrier for a user to lift and carry. The handle includes but is not limited to a telescopic handle; and in the second state, a user can extend the handle to serve as a handle rod during pushing, thereby facilitating force application.

In this embodiment, in the first state, the front leg assembly 3 and the rear leg assembly 2 are stored on the carrier body 1, thereby facilitating the combined use with the automobile seat, increasing the space utilization rate in the automobile and improving the riding safety **in** the carrier; and in the second state, the front leg assembly 3 and the rear leg assembly 2 are unfolded and supported on the ground, so that pushing is facilitated, and the state switching process of the child carrier is convenient and easy to operate.

Referring to FIG. 1 to FIG. 3, in some embodiments, the front leg assembly 3 is configured to drive the rear leg assembly 2 by the connecting rod assembly 4 to slide on the chute assembly in a process of switching the first state to the second state. In this embodiment, a wheel end of the front leg assembly 3 can be folded by a user towards a direction close to the seat plate; in the folding process, the connecting rod assembly 4 pushes the rear joint assembly to move on the chute assembly towards the highest point of the chute assembly, and drives a rear wheel end of the rear leg assembly 2 to be folded towards a direction close to the backrest assembly; and when the rear joint assembly moves to the highest point of the chute assembly, the front leg assembly 3 is folded close to the seat plate, the rear leg assembly 2 is folded close to the backrest assembly, and at this time, the child carrier is switched to the second state.

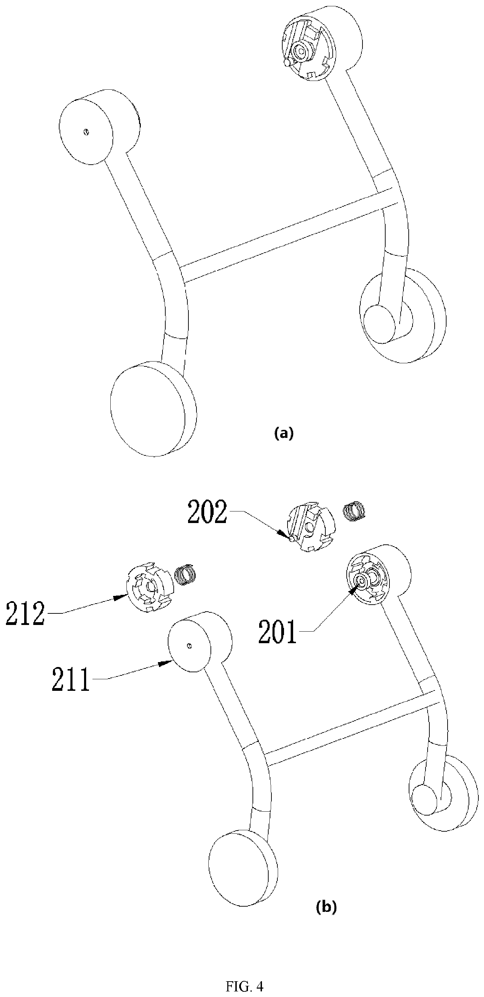

FIG. 4(a) is a structural schematic diagram of a rear leg assembly 2 and a rear joint assembly according to some embodiments of a child carrier of the present disclosure, and FIG. 4(b) is a structural schematic exploded view of a rear joint assembly according to some embodiments of a child carrier of the present disclosure. Referring to FIG. 1 to FIG. 4, **in** some embodiments, the rear joint assembly has a locking member 203 and a rear joint cover 211, the locking member 203 is slidably arranged in the rear joint cover 211 in an axial direction of the rear joint cover (211), and the rear leg assembly 2 is connected to the rear joint cover 211; and the chute assembly has a first chute 101 and a second chute 102, a length direction of the first chute 101 and a length direction of the second chute 102 are intersected, and the locking member 203 and the rear joint cover 211 are respectively slidingly connected to the first chute 101 and the second chute 102.

In this embodiment, a first protrusion 201 may be arranged on the rear joint cover 211 to be matched with the first chute 101, and a second protrusion 202 is arranged on the locking member 203 to be matched with the second chute 102, so that the rear joint cover 211 and the locking member 203 rotate and slide relatively to drive the rear leg assembly 2 to be unfolded or folded.

Referring to FIG. 1 to FIG. 3, in some embodiments, a distance between the first chute 101 and the second chute 102 is increased gradually in a direction away from the ground, so that the rear leg assembly 2 swings forward while moving upward along with the rear joint assembly. In this embodiment, the first chute 101 and the second chute 102 are set as a non-parallel state, so that the rear leg assembly 2 can rotate to be folded towards a direction close to the backrest assembly while moving upwards on the chute assembly along with the rear joint assembly, thereby improving the operability of the child carrier and making the state switching process performed by the user simpler and easier.

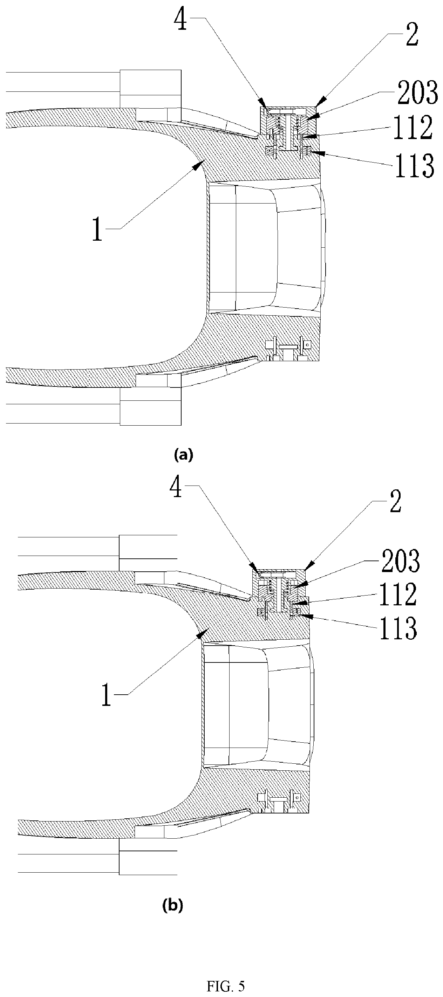

FIG. 5(a) is a structural schematic diagram in which a first locking mechanism unlocks a rear joint cover 211 according to some embodiments of a child carrier of the present disclosure, and FIG. 5(b) is a structural schematic diagram in which a first locking mechanism locks a rear joint cover 211 according to some embodiments of a child carrier of the present disclosure. Referring to FIG. 1 to FIG. 5, in some embodiments, the backrest assembly has a sliding low-point mounting slot 103 which is arranged adjacent to one end of the chute assembly close to the ground, and the sliding low-point mounting slot 103 is recessed towards an inner side of the backrest assembly relative to the chute assembly.

The child carrier further includes a first locking mechanism. The first locking mechanism is connected to the locking member 203 and is configured to adjust the relative position of the locking member 203 and the rear joint cover 211 in an axial direction of the rear joint cover 211, thereby switching the rear joint cover 211 between a low-point locked state and a low-point unlocked state. In the low-point locked state of the rear joint cover 211, the locking member 203 is configured to limit the rotation and sliding of the rear joint cover 211 relative to the carrier body 1, and at this time, the rear leg assembly 2 can be kept in an unfolded state; and in the low-point unlocked state of the rear joint cover 211, the rear joint cover 211 can rotate and/or slide relative to the carrier body 1, and at this time, the rear leg assembly 2 can be folded.

In this embodiment, the backrest assembly is provided with the sliding low-point mounting slot 103, so that the rear leg assembly 2 can be locked when the child carrier is switched to the second state, the relative movement of the connecting rod assembly 4 and the front leg assembly 3 is further inhibited, and the leg rear assembly 3 and the rear leg assembly 2 can still be kept in an unfolded state, thereby improving the structural reliability when the child carrier serves as a stroller. When it is necessary to switch to the first state, the locked state can be unlocked by operating the first unlocking mechanism, and the front leg assembly 3 is folded by applying a force to the front leg assembly 3 from the outside of the child carrier, so that the rear joint assembly moves on the chute assembly to the highest point, the rear leg assembly 2 is folded to the periphery of the backrest assembly along with the rotation of the front leg assembly 3 and the connecting rod assembly 4, and the front leg assembly 3 and the rear leg assembly 2 are simply and conveniently switched to a position convenient for storage and hiding.

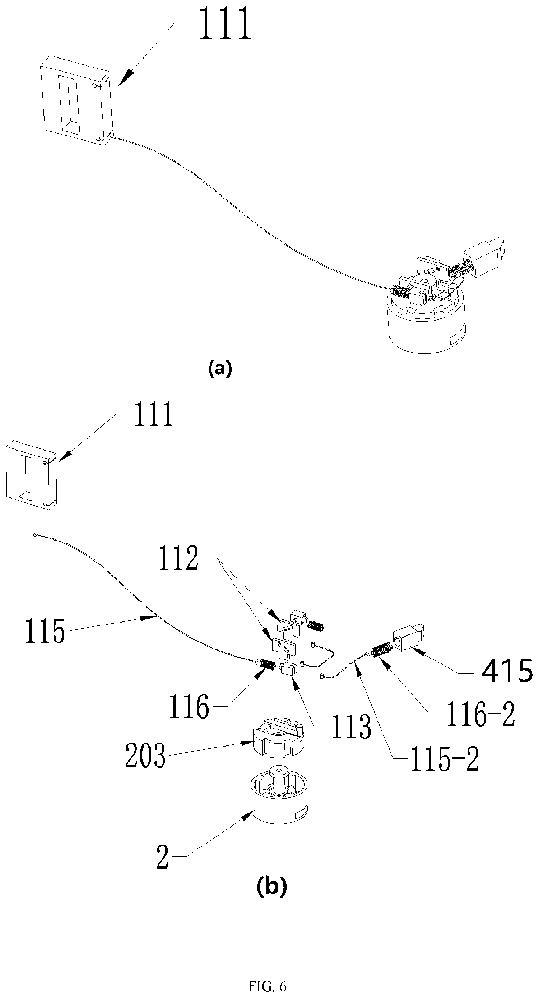

FIG. 6(a) is a schematic diagram of a connection relationship of a first locking mechanism and a first unlocking member 111 according to some embodiments of a child carrier of the present disclosure, and FIG. 6(b) is a schematic diagram of structure decomposition of a first locking mechanism according to some embodiments of a child carrier of the present disclosure. Referring to FIG. 5 to FIG. 6, in some embodiments, the child carrier further includes a first unlocking member 111. The first locking mechanism includes: a jacking block 112, a pulling block 113 and a first reset element 116. The jacking block 112 has an inclined groove and abuts against the locking member 203. The pulling block 113 has a groove matched with the inclined groove of the jacking block 112, and is slidingly connected to the jacking block 112 along the inclined groove of the jacking block 112, and is connected to the first unlocking member 111 through a first cable 115. The first reset element 116 is arranged between an end of a cord and the pulling block 113.

In the locked state of the rear joint cover 211, the first reset element 116 keeps the locking member 203 located between the sliding low-point mounting slot 103 and the rear joint cover 211 in the axial direction of the rear joint cover 211, and at this time, the locking member 203 and the rear joint cover 211 cannot rotate relatively. The pulling block 113 is configured to move along with the operation of the first unlocking member 111. When the first unlocking member 111 is pressed upwards by a user, the first cable 115 is driven to pull the pulling block 113 to move in a length direction of the chute on the locking member 203, so that the jacking block 112 is driven to move towards the locking member 203 and push the locking member 203 to deviate from the sliding low-point mounting slot 103 in the axial direction of the rear joint cover 211, the locking member 203 retracts into the rear joint cover 211 to unlock the rear joint cover 211, and at this time, the rear joint cover 211 and the locking member 203 can rotate relatively.

In this embodiment, through the cooperation of the first unlocking member 111 and the first locking mechanism, a user operates the first unlocking member 111 only by pressing to unlock the rear joint rear 211 conveniently and rapidly, so that the unfolded front leg assembly 3 and rear leg assembly 2 can be folded, and the child carrier can be switched from the first state to the second state rapidly.

Referring to FIG. 1 to FIG. 3, in some embodiments, the front leg assembly 3 includes two front leg rods and a first crossbar 301, the two front leg rods are respectively hinged to two sides of the carrier body 1 respectively, one end of each of the front leg rods close to the ground is connected to a front wheel group, and the first crossbar 301 is connected between the two front leg rods. The seat plate has a second groove 107, and the second groove 107 is formed at the bottom of the seat plate, so that in the first state, the first crossbar 301 is folded in the first groove 107.

In this embodiment, the backrest assembly will bend forwards when being impacted by collision, and an impact force borne by the backrest assembly may be transferred to the front leg assembly 3 and the first crossbar 301 through the connecting rod assembly 4. Since the bottom of the seat plate abuts against a seat surface of a motor carrier, when the backrest assembly is subjected to a forward impact force, the impact load is conducted in multiple stages and the seat surface of the motor carrier is finally stressed, so that the force at the intersection of the seat plate and the backrest assembly of the carrier body 1 can be shared by the seat of the motor carrier across the seat plate, the safety of the child carrier can be improved, and the structure lightweight requirement can be met.

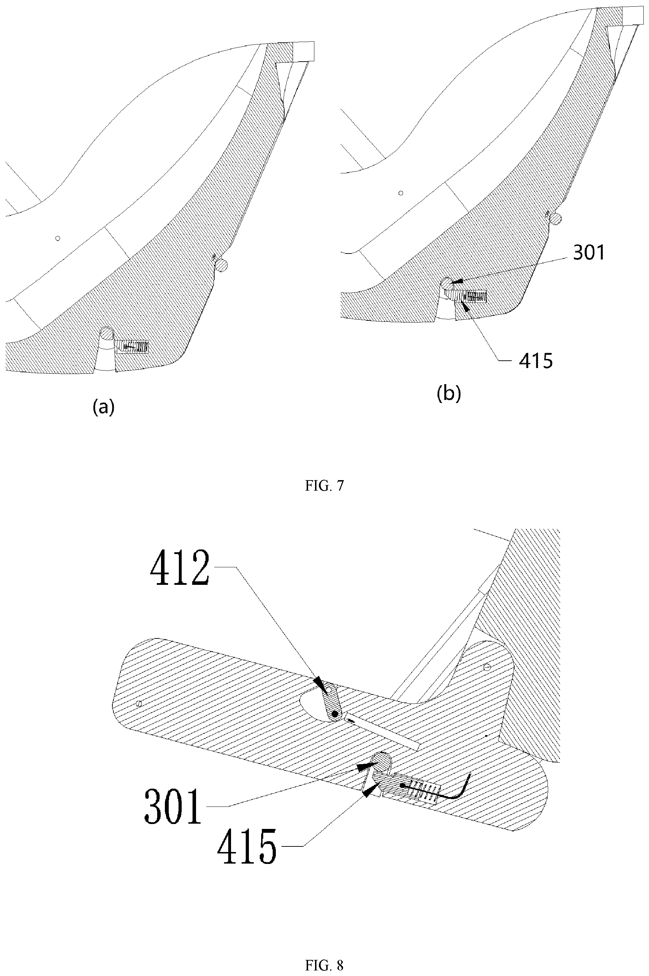

FIG. 7(a) is a structural schematic diagram in which a first locking mechanism unlocks a first crossbar 301 according to some embodiments of a child carrier of the present disclosure, and FIG. 7(b) is a structural schematic diagram in which a first locking mechanism locks a first crossbar 301 according to some embodiments of a child carrier of the present disclosure. Referring to FIG. 7(a) and FIG. 7(b), in some embodiments, the child carrier further includes: a second locking mechanism arranged on a groove wall of the second groove 107, so that the first crossbar 301 is switched between the locked state and the unlocked state. In the locked state of the first crossbar 301, the second locking mechanism is configured to limit the first crossbar 301 within the second groove 107; and in the unlocked state of the first crossbar 301, the first crossbar 301 is capable of deviating from the second groove 107. An auxiliary block 419 may be arranged in the second groove 107 to assist the first crossbar 301 in ejecting therefrom.

In this embodiment, a second locking mechanism capable of extending out or retracting back relative to the seat plate is arranged on the groove wall of the second groove 107, so that in the second state, the first crossbar 301 can be locked in the second groove 107 without falling out to inhibit the movement of the front leg assembly 3, the folded state of a child assembly is more stable and reliable, and it is convenient for a user to carry and move and combine with an automobile seat. When it is necessary to unfold the child carrier, the first locking mechanism is operated to retract into the seat plate, the first crossbar 301 can deviate from the second groove 107, thereby achieving flexible switching under different states.

FIG. 8 is a sectional view of a seat plate according to some embodiments of a child carrier of the present disclosure. Referring to FIG. 7 and FIG. 8, in some embodiments, the child carrier further includes a first unlocking member 111. The second locking mechanism includes: a crossbar locking clamping pin 415 and a second reset element 116-2; the crossbar locking clamping pin 415 is connected to the first unlocking member 111 through a second cable 115-2; and the second reset element 116-2 is arranged between an end part of the second cable 115-2 and the crossbar locking clamping pin 415.

In the locked state of the first crossbar 301, the reset element keeps the crossbar locking clamping pin 415 in a state of extending out relative to the groove wall of the second groove 107 to limit the first crossbar 301 from moving out of the second groove 107; and the crossbar locking clamping pin 415 is configured to retract into the groove wall of the second groove 107 along with the operation of the first unlocking member 111, so that the first crossbar 301 is unlocked and can deviate from the second groove 107.

In this embodiment, the second locking mechanism and the first locking mechanism may be connected to the first unlocking member 111 through the cord, and the second locking mechanism and the first locking mechanism can be linked only by operating the first unlocking member 111 by a user so as to unlock the locked states of the first crossbar 301 and the rear leg cover at the same time, thereby assisting the child carrier in switching from the folded state to the unfolded state rapidly.

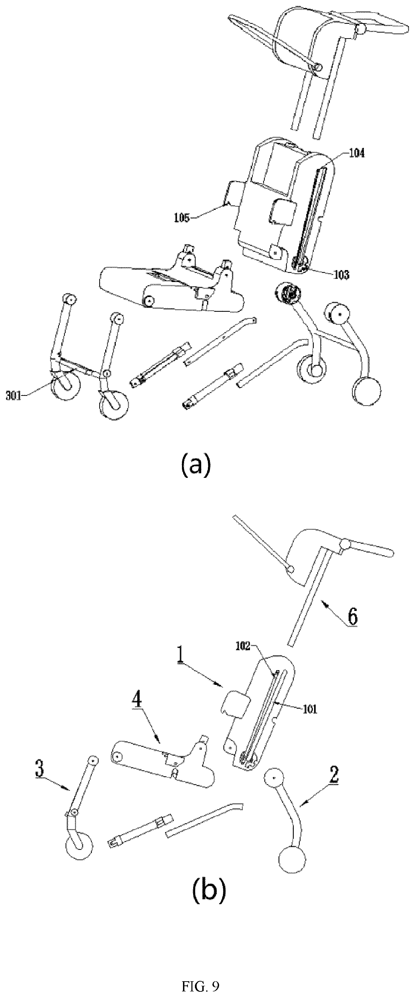

FIG. 9(a) is a three-dimensional schematic diagram of structure decomposition according to some other embodiments of a child carrier of the present disclosure. Referring to FIG. 9(a), in some embodiments, the first crossbar 301 has a force-bearing block, so that the force-bearing block is flush with a bottom surface of the seat plate in the first state.

In this embodiment, when the force-bearing block protrudes outwards relative to the first crossbar 301 ,so that the force-bearing block is flush with a bottom surface of the seat plate when it is folded in the second groove 107, , so that the fitting tightness of the seat plate and the automobile seat is improved, and the impact force borne by the backrest assembly can be transferred to the front leg assembly 3 and the first crossbar 301 through the connecting rod assembly 4 and then can be transferred to the seat surface of the motor vehicle abutting against the bottom of the seat plate. Therefore, when the backrest assembly is subjected to a forward impact force, the impact load is conducted in multiple stages and the seat surface of the motor vehicle is finally stressed. The multi-stage conduction of the impact force and the triangular supporting structure share the force at the intersection of the seat plate and the backrest assembly of the carrier body 1, so that the safety of the child carrier can be significantly improved, and a lighter structure can be achieved.

Referring to FIG. 1 to FIG. 3, in some embodiments, the seat plate and the backrest assembly are fixedly connected or integrally formed, and the connecting rod assembly 4 is a connecting rod assembly 4 with a fixed length. In this embodiment, the connecting rod assembly 4 is set to have a fixed length; and in the second state, the relative movement of the connecting rod assembly 4 and the rear leg assembly 2 can be limited by locking the first crossbar 301 and without locking the rear leg assembly 2, so the structure is simple and easy to operate.

FIG. 9(b) is a planar schematic diagram of structure decomposition according to some other embodiments of a child carrier of the present disclosure. Referring to FIG. 9(a) and FIG. 9(b), in some embodiments, the seat plate is rotatably connected to the seat plate assembly, where the connecting rod assembly 4 has a first connecting rod 511 and a second connecting rod 512, and the second connecting rod 512 is sleeved in the first connecting rod 511 and is capable of sliding relative to the first connecting rod 511, so that the length of the connecting rod assembly 4 is adjustable. In this embodiment, the backrest assembly can rotate towards the seat plate, so that the backrest assembly and the seat plate can be further abutted and folded, and a more compact storage state can be achieved.

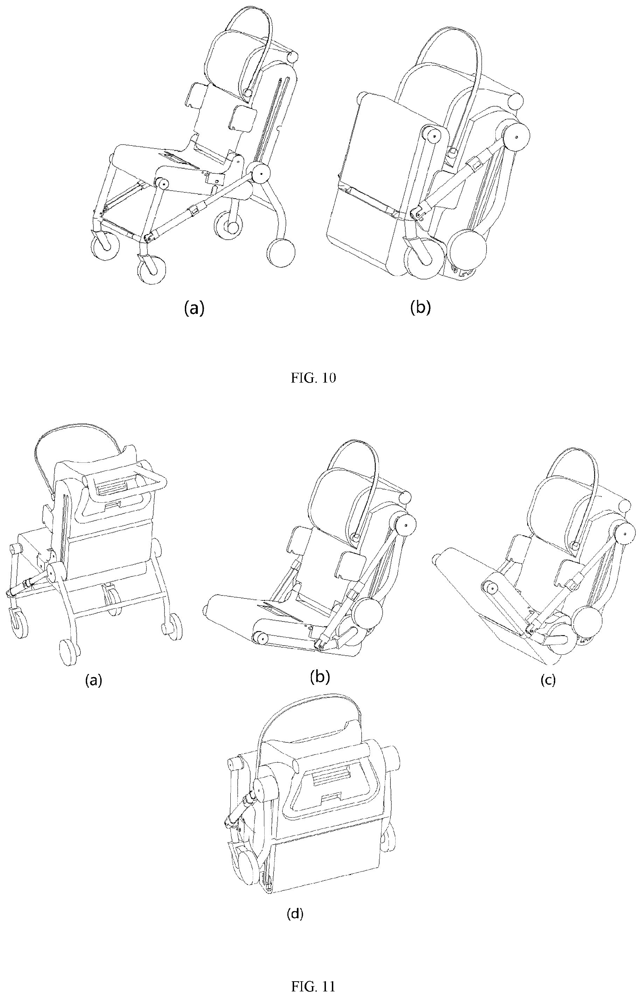

FIG. 10(a) is a structural schematic diagram of a second state according to some other embodiments of a child carrier of the present disclosure, and FIG. 10(b) is a structural schematic diagram of a third state according to some other embodiments of a child carrier of the present disclosure. Referring to FIG. 10(a) and FIG. 10(b), in some embodiments, the child carrier further has a third state, where in the third state, a front surface of the backrest assembly and an upper surface of the seat plate are opposite to each other, and are at an acute angle or parallel; the second connecting rod 512 retracts into the first connecting rod 511; the front leg assembly 3 abuts against the seat plate; and the rear leg assembly 2 abuts against the backrest assembly.

In this embodiment, the backrest assembly and the seat plate assembly can achieve an opening and closing angle of 0°-98°, and a user can fold the backrest assembly and the seat plate to achieve a smaller folded state without occupying an excessive storage state, thereby facilitating carrying and storage.

FIG. 11(a) is a structural schematic diagram of a second state according to some other embodiments of a child carrier of the present disclosure, FIG. 11(b) is a structural schematic diagram of a first state according to some other embodiments of a child carrier of the present disclosure, FIG. 11(c) is a structural schematic diagram of switching between a first state and a second state according to some other embodiments of a child carrier of the present disclosure, and FIG. 11(d) is a structural schematic diagram of a switching process of a third state according to some other embodiments of a child carrier of the present disclosure. Referring to FIG. 11(a), FIG. 11(b), FIG. 11(c) and FIG. 11(d), in some embodiments, the third state is the smallest folded state of the child carrier, and in the third state, the child carrier is used for storage and/or carrying. In this embodiment, the child carrier can be used for a user to push outwards in the second state, and can be folded from the second state to the first state for cooperate with the automobile seat in the carrier vehicle. When storage is required, the backrest assembly and the seat plate can be folded to the smallest storage state. The states are switched flexibly, thereby facilitating the operation and improving the operation experience of users.

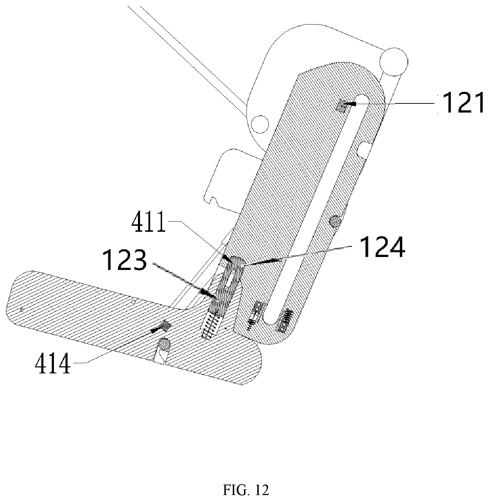

FIG. 12 is a sectional view according to some other embodiments of a child carrier of the present disclosure. Referring to FIG. 12, in some embodiments, the backrest assembly has a first cavity 123, and the seat plate has a second cavity 124. The child carrier further includes a third locking mechanism. The third locking mechanism is slidably arranged in the first cavity 123 and the second cavity 124, and is configured to switch the backrest assembly between the rotation locked state and the rotation unlocked state. In the rotation locked state of the backrest assembly, a mouth of the first cavity 123 is docked with a mouth of the second cavity 124, the first cavity 123 communicates with the second cavity 124, and the third locking mechanism is configured to limit the relative rotation of the backrest assembly and the seat plate; and in the rotation unlocked state of the backrest assembly, the mouth of the first cavity 123 is separated from the mouth of the second cavity 124, and the backrest assembly is configured to rotate relative to the seat plate.

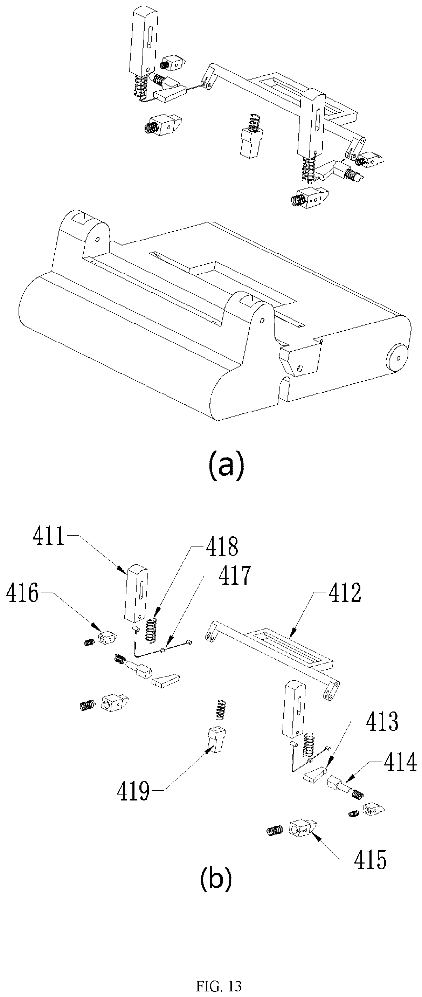

FIG. 13(a) is a structural schematic diagram of an unlocking handle 412 according to some other embodiments of a child carrier of the present disclosure, and FIG. 13(b) is a schematic diagram of structure decomposition of an unlocking handle 412 according to some other embodiments of a child carrier of the present disclosure. Referring to FIG. 13(a) and FIG. 13(b), in some embodiments, the third locking mechanism includes: a backrest locking clamping pin 411 and a third reset element 418. The backrest locking clamping pin 411 is connected to the unlocking handle 412 through the third cable 417, and a third reset element 418 is connected between a first end of the backrest locking clamping pin 411 and a first end of the second cavity 124 away from the mouth of the second cavity 124. The third reset element 418 may be configured to keep the included angle of the backrest assembly and the seat plate assembly 98°.

In the rotation locked state of the backrest assembly, a second end of the backrest locking clamping pin 411 abuts against a second end of the first cavity 123 away from the mouth of the first cavity 123, the first end of the backrest locking clamping pin 411 is located in the second cavity 124, the second end of the backrest locking clamping pin 411 is located in the first cavity 123, and the backrest locking clamping pin 411 is clamped between the backrest assembly and the seat plate to inhibit the relative rotation of the backrest assembly and the seat plate.

The child carrier further includes an unlocked handle 412 arranged on the seat plate. The unlocking handle 412 can rotate relative to an upper surface of the seat plate. The backrest locking clamping pin 411 is configured to vertically move towards the first end of the second cavity 124 along with the rotation of the unlocking handle 412 so as to deviate from the first cavity 123. At this time, the backrest locking clamping pin 411 completely moves into the second cavity 124, and the backrest assembly and the seat plate can rotate relatively, so that the backrest assembly is in the unlocked state.

In this embodiment, the unlocking handle 412 can be arranged on the seat plate, and a user can switch the relative rotation or relative locking state of the backrest assembly and the seat plate by lifting or lowering the unlocking handle 412, which is simple and easy to operate.

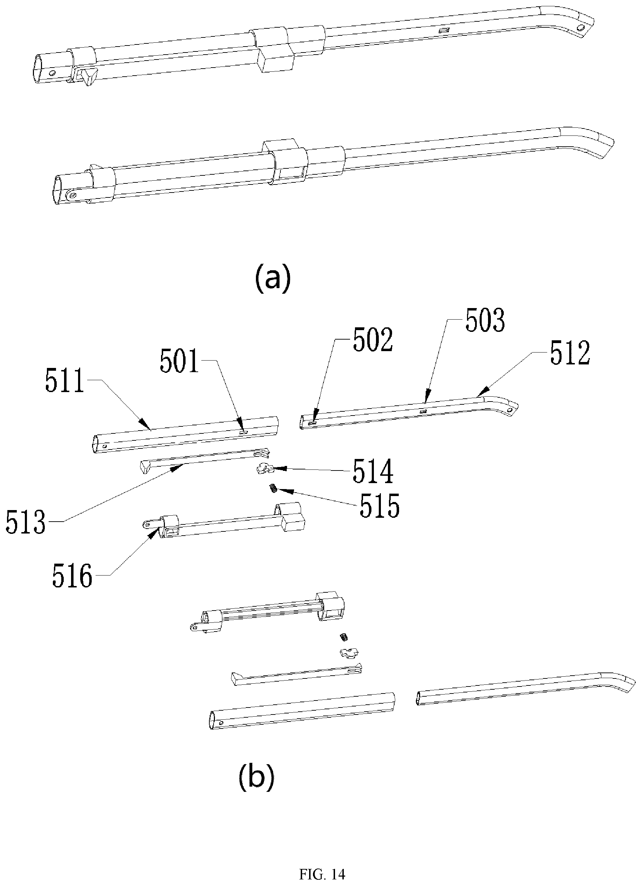

FIG. 14(a) is a structural schematic diagram of a connecting rod assembly according to some other embodiments of a child carrier of the present disclosure, and FIG. 14(b) is a schematic diagram of structure decomposition of a connecting rod assembly according to some other embodiments of a child carrier of the present disclosure. Referring to FIG. 14(a) and FIG. 14(b), in some embodiments, the child carrier further includes a fourth locking mechanism, and the fourth locking mechanism is arranged on the connecting rod assembly 4.

In the locked state of the connecting rod assembly 4, the fourth locking mechanism is configured to limit the relative movement of the first connecting rod 511 and the second connecting rod 512, and at this time, the first connecting rod 511 and the second connecting rod 512 cannot extend or retract relatively and the length of the connecting rod assembly 4 is fixed; and in the unlocked state of the connecting rod assembly 4, the first connecting rod 511 and the second connecting rod 512 are capable of being telescopic relatively.

In this embodiment, when the front leg assembly 3 and the rear leg assembly 2 of the child carrier are unfolded for pushing on the ground, the connecting rod assembly 4 can be locked to enhance the structural stability and improve the outdoor use safety. When the child carrier is required to be switched between the states, the connecting rod assembly 4 can be unlocked to achieve rapidly switching between the states. When the child carrier is in the second state and the third state, the connecting rod assembly 4 can be locked, so that the child carrier is folded more compactly and reliably.

Referring to FIG. 14(a) and FIG. 14(b), in some embodiments, the fourth locking mechanism includes: a fixing seat 516, a connecting rod clamping pin 514 and a fourth reset element 515. The fixing seat 516 includes a support strip 513, a first end of the support strip 513 has a sliding long groove, a second end of the support strip has an accommodating groove, the first end of the support strip 513 is provided with a first sleeve section, the first sleeve section communicates with the sliding long groove, the second end of the support strip is provided with a second sleeve section, the second sleeve section communicates with the accommodating groove, and the first sleeve section and the second sleeve section are sleeved on the first connecting rod 511. The connecting rod clamping pin 514 is arranged in the accommodating groove, and the fourth reset element 515 is arranged between the accommodating groove and the connecting rod clamping pin 514, where in the locked state of the connecting rod assembly 4, the fourth reset element 515 is configured to keep the connecting rod clamping pin 514 at a locked position of passing through a through hole 501 in the first connecting rod and a through hole 502 in the second connecting rod.

In this embodiment, in the locked state, the fourth reset element 515 can keep the connecting rod clamping pin 514 passing through the through hole 501 in the first connecting rod and the through hole 502 in the second connecting rod at the same time so as to limit the relative movement of the first connecting rod 511 and the second connecting rod 512. In the unlocked state, the connecting rod clamping pin 514 can deviate from the through hole 501 in the first connecting rod and the through hole 502 in the second connecting rod relatively, so that the first connecting rod 511 and the second connecting rod 512 can be telescopic.

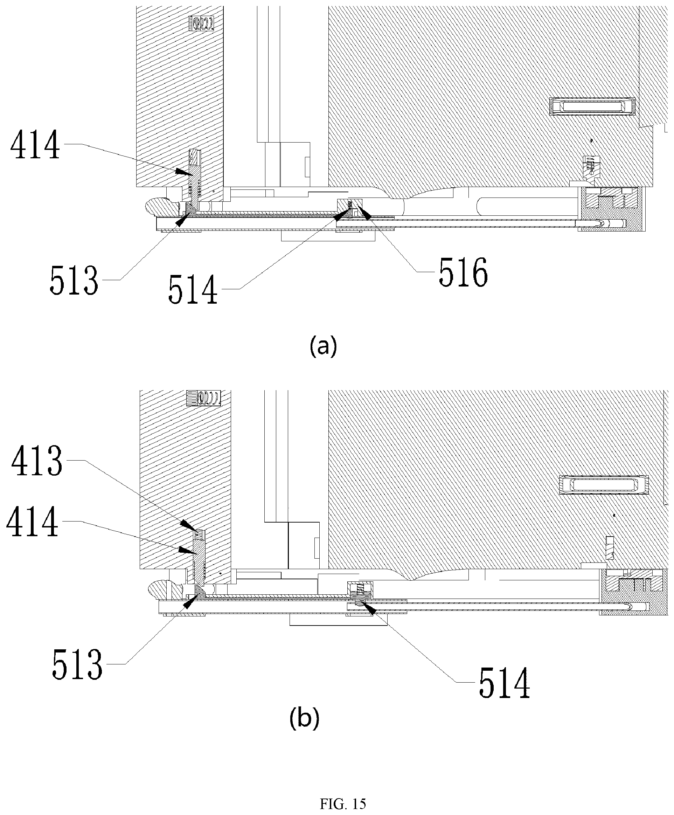

FIG. 15(a) is a structural schematic diagram in which a connecting rod assembly 4 is in an unlocked state according to some other embodiments of a child carrier of the present disclosure, and FIG. 15(b) is a structural schematic diagram in which a connecting rod assembly 4 is in a locked state according to some other embodiments of a child carrier of the present disclosure. Referring to FIG. 14 to FIG. 15, in some embodiments, the child carrier further includes: an unlocking handle 412, an unlocking strip, an unlocking pulling block 413 and an unlocking jacking block 414.

The unlocking handle 412 is arranged on the seat plate. The unlocking pulling block 413 and the unlocking jacking block 414 are arranged in the seat plate, and the unlocking pulling block 413 is connected to the third cable 417 connecting the unlocking handle 412, so that the unlocking pulling block 413 is driven through the rotation of the unlocking handle 412 to push the unlocking jacking block 414 to extend out. The unlocking strip is slidably arranged between the fixing seat 516 and the first connecting rod 511, two ends of the unlocking strip are respectively provided with a first wedge block and a second wedge block, the first wedge block passes through the sliding long groove and abuts against the unlocking jacking block 414, and an inclined surface of the second wedge block is slidably connected to the connecting rod clamping pin 514.

The unlocking jacking block 414 is configured to push the first wedge block to make the unlocking strip slide in a direction parallel to the first connecting rod 511 when extending out. The second wedge block is configured to push the connecting rod clamping pin 514 through the inclined surface to retract into the accommodating groove so as to deviate from the locked position passing through the through hole 501 in the first connecting rod and the through hole 502 in the second connecting rod when the unlocking strip slides.

In this embodiment through the cooperation of the fourth locking mechanism, the unlocking handle 412, the unlocking strip, the unlocking pulling block 413 and the unlocking jacking block 414, a user can switch the connecting rod assembly 4 between the locked and unlocked states conveniently and rapidly by rotating the unlocking handle 412. The unlocking handle 412 can be linked with the unlocking of the connecting rod assembly 4 and the unlocking of the relative rotation of the backrest assembly and the seat body, so that the child carrier can be operated more flexibly and conveniently.

Referring to FIG. 14, in some embodiments, the connecting rod assembly 4 includes: a damping clamping groove, arranged in the second connecting rod 512. The connecting rod clamping pin 514 is embedded in the damping clamping groove and configured to move relative to the damping clamping groove.

**In** the locked state of the connecting rod assembly 4, the connecting rod clamping pin 514 is located in the damping clamping groove and configured to limit the relative movement of the first connecting rod 511 and the second connecting rod 512, and the connecting rod clamping pin 514 is configured to deviate from the damping clamping groove when being subjected to a preset external force, so that the first connecting rod 511 and the second connecting rod 512 can be relatively telescopic.

**In** this embodiment, the magnitude of the preset external force and the damping magnitude of the damping clamping groove can be adjusted according to the actual application scenario, so that on the premise of meeting the stable locking of the connecting rod assembly 4, it is convenient for a user to apply a force to pull the connecting rod assembly 4 apart, thereby unlocking to extend and retract the connecting rod assembly to a length required by the user.

Referring to FIG. 9 and FIG. 12, in some embodiments, the backrest assembly has a sliding high-point mounting slot 104 arranged adjacent to one end of the chute assembly away from the ground. The child carrier further includes a fifth locking mechanism. The fifth locking mechanism is movably connected to the sliding high-point mounting slot 104, so the rear joint cover 211 is switched between a high-point locked state and a high-point unlocked state.

**In** the high-point locked state of the rear joint cover 211, the fifth locking mechanism limits the rear joint cover 211 and/or the locking member 203 from sliding along the chute assembly to one end close to the ground; and in the high-point unlocked state of the rear joint cover 211, the rear joint cover 211 and/or the locking member 203 can slide along the chute assembly.

In this embodiment, the rear joint assembly can be locked when moving to the highest point position of the chute, so that the first state and the second state of the child carrier can be folded more tightly and stably and are not easy to loosen.

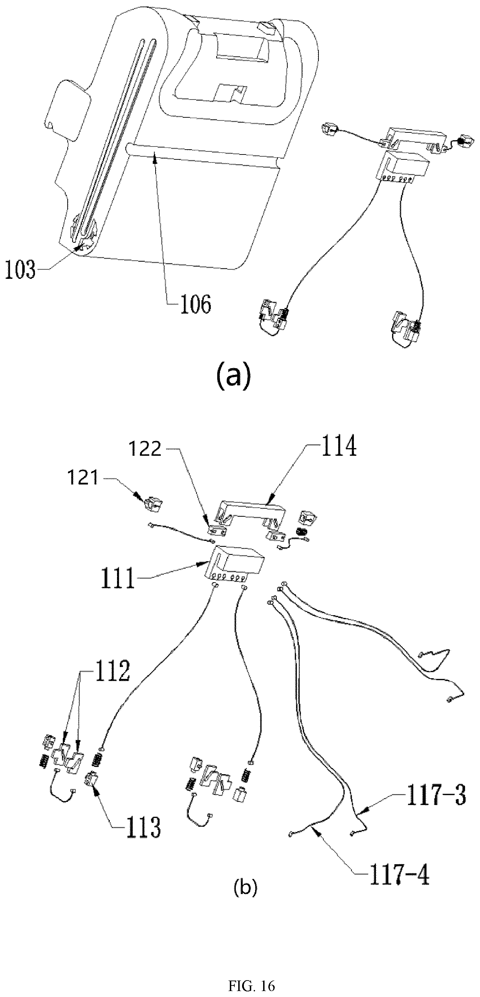

FIG. 16(a) is a structural schematic diagram of a first unlocking member and a second unlocking member according to some other embodiments of a child carrier of the present disclosure, and FIG. 16(b) is a schematic diagram of structure decomposition of a first unlocking member and a second unlocking member according to some other embodiments of a child carrier of the present disclosure. Referring to FIG. 9, FIG. 12 and FIG. 16, in some embodiments, the child carrier further includes a second unlocking member 114, and two ends of the second unlocking member 114 have inclined grooves. The fifth locking mechanism includes: a high-point clamping pin pulling block 122 and a high-point clamping pin 121. The high-point clamping pin pulling block 122 is slidably connected to the second unlocking member 114 along the inclined grooves of the second unlocking member 114. The high-point clamping pin 121 abuts against the high-point clamping pin pulling block 122.

In the high-point locked state of the rear joint cover 211, the high-point clamping pin 121 extends out relative to the sliding high-point mounting slot 104 to limit the rear joint cover 211 and/or the locking member 203 from sliding towards a direction close to the ground, and the high-point clamping pin pulling block 122 is configured to move along the spout with the operation of the second unlocking member 114 to pull the high-point clamping pin 121 to retract in the sliding high-point mounting slot 104, so that the rear joint cover 211 and/or the locking member 203 can slide along the chute assembly.

In this embodiment, the high-point clamping pin 121 can limit the rear joint assembly from moving downwards along the chute assembly, so that the child carrier is not easy to disperse under the folded scenario of the first state and the third state, and is easy to carry.

Referring to FIG. 9 to FIG. 13, in some embodiments, a side surface of the backrest assembly is provided with a side board, a lower side of the side board is provided with a folding clamping slot 105, and a side surface of the seat plate is provided with a folding locking clamping pin 416. In the folding locked state of the backrest assembly, the folding locking clamping pin 416 is buckled in the folding clamping slot 105 to limit the relative movement of the seat plate and the backrest assembly; and in the folding unlocked state of the backrest assembly, the folding locking clamping pin 416 is folded to deviate from the folding clamping slot 105.

In this embodiment, by the folding locking clamping pin 416 and the folding clamping slot 105, the folding locking clamping pin 416 can be clamped in the folding clamping slot 105 in the third state, thereby further limiting the relative movement of the backrest assembly and the seat plate, preventing the backrest assembly from deviating from the folded state and improving the folding reliability.

Referring to FIG. 13 and FIG. 16, in some embodiments, the child carrier further includes: a first unlocking member 111 connected to the folding locking clamping pin 416 through a sixth cable 117-4. The folding locking clamping pin 416 is configured to deviate from the folding clamping slot 105 along with the operation of the first unlocking member 111. In this embodiment, the first unlocking member 111 may also be linked with the folding locking clamping pin 416, and the first unlocking member 111 is pressed to achieve the unlocking of the folding pin, the unlocking of the first crossbar 301 in the second groove 107 and the unlocking of the rear joint cover 211 at the lowest position of the chute assembly, thereby greatly improving the operation experience of users and achieving flexibility and convenience. In some other embodiments, the first unlocking member 111 may also be fixedly connected to the folding locking clamping pin 416 through the crossbar locking clamping pin.

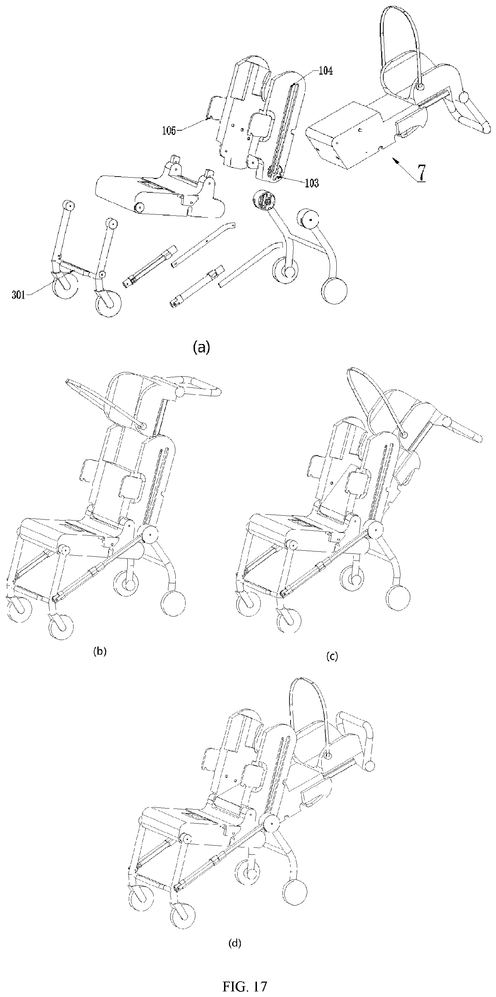

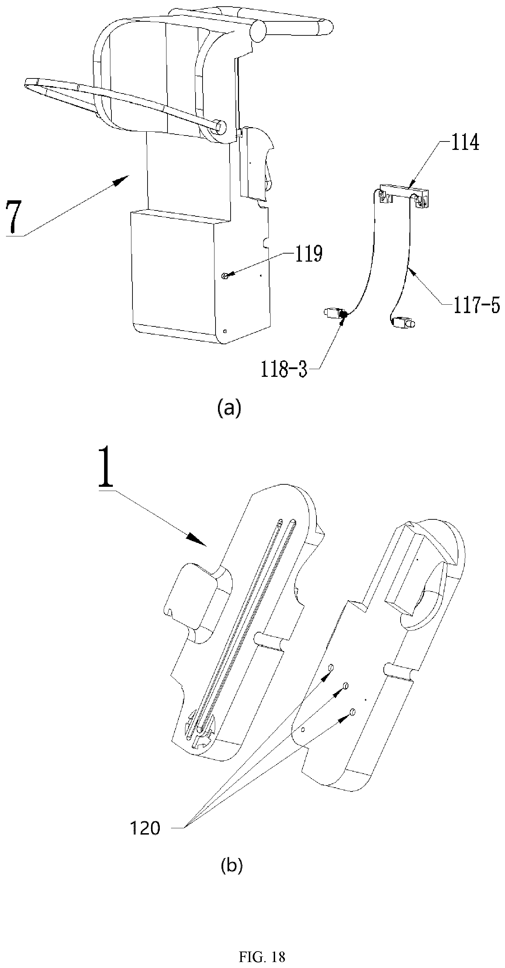

FIG. 17(a) is a schematic diagram of structure decomposition according to yet some other embodiments of a child carrier of the present disclosure, FIG. 17(b) is a structural schematic diagram according to yet some other embodiments of a child carrier of the present disclosure, FIG. 17(c) is a schematic diagram of a semi-lying state according to yet some other embodiments of a child carrier of the present disclosure, FIG. 17(d) is a schematic diagram of a full-lying state according to yet some other embodiments of a child carrier of the present disclosure, FIG. 18(a) is a structural schematic diagram of an adjustable backrest 7 according to yet some other embodiments of a child carrier of the present disclosure, and FIG. 18(b) is a structural schematic diagram of a side edge structure according to yet some other embodiments of a child carrier of the present disclosure. Referring to FIG. 17 to FIG. 18, in some embodiments, the backrest assembly has: an adjustable backrest 7 and two side edge structures. The adjustable backrest 7 is rotatably connected to the seat plate, and the two side edge structures are respectively arranged on two sides of the adjustable backrest 7.

In this embodiment, the adjustable backrest 7 and the side edge structures can rotate relative to the same axis on the seat plate, and the adjustable backrest 7 further can adjust the relative included angle relative to the side edge structures. Therefore, the child carrier can achieve a full-lying state, a semi-lying state and a sitting state, thereby providing more operation and use selections for users.

Referring to FIG. 17 and FIG. 18, in some embodiments, the angle of the adjustable backrest 7 relative to the side edge structures is adjustable. One side of each of the side edge structures close to the adjustable backrest 7 has a plurality of backrest-adjusting fixed grooves 120, and the plurality of backrest-adjusting fixed grooves 120 correspond to different angles of the adjustable backrest 7. The adjustable backrest 7 has a backrest-locking clamping pin 119, and the backrest-locking clamping pin 119 is configured to be inserted into one of the plurality of backrest-adjusting fixed grooves 120 respectively to make the adjustable backrest 7 and the seat plate form different included angles.

In this embodiment, each of the side edge structure is provided with the backrest-adjusting fixed groove 120 corresponding to the included angle to cooperate with the backrest-locking clamping pin 119, so that the adjustable backrest 7 and the seat plate can form different included angles, thereby proving numerous use postures for users and improving the use experience of the users.

Referring to FIG. 17 and FIG. 18, in some embodiments, the child carrier further includes: a second unlocking member 114. The backrest-adjusting pulling block 118-3 is arranged on the adjustable backrest 7, connected to the second unlocking member 114 through a seventh cable 117-5 and connected to the backrest-locking clamping pin 119. The backrest-adjusting pulling block 118-3 is configured to drive the backrest-locking clamping pin 119 along with the operation of the second unlocking member 114 to deviate from the backrest-adjusting fixed groove 120. In this embodiment, the second unlocking member 114 can also be linked with the angle-adjusting operation of the backrest, and the adjustable backrest 7 can be rotated to a required angle by pressing the second unlocking member 114 and can keep the backrest 7 can be kept at the required angle by releasing the second unlocking member 114 by a user.

Referring to FIG. 9 to FIG. 11 and FIG. 17, in some embodiments, the child carrier further includes: a handle headrest assembly 6, having a headrest and a sliding rod, where the headrest is connected to the sliding rod, the sliding rod is inserted into the backrest assembly, and a relative distance of the headrest and the backrest assembly is adjustable. In this embodiment, the handle headrest assembly 6 may be provided, which is convenient for a user to push and lift the child carrier and can elevate the headrest area for a baby. The child carrier may further include a sunshade arranged on the headrest, and the shading range of the sunshade can be adjusted by rotating the end part of the sunshade.

Referring to FIG. 9 to FIG. 11 and FIG. 17, in some embodiments, the child carrier further includes: a first handle, rotatably connected to a rear surface of the headrest. In this embodiment, the first handle is arranged on the headrest and can rotate relative to the headrest, which is convenient for users to achieve proper and labor-saving holding postures under different states and use requirements.

Referring to FIG. 1 to FIG. 3, FIG. 9 to FIG. 11 and FIG. 17, in some embodiments, the rear leg assembly 2 has two rear leg rods and a second crossbar; and the two rear leg rods are arranged on two sides of the carrier body 1 respectively, and one end of the rear leg assembly 2 close to the group is connected to a rear wheel group. In addition, a parking apparatus may be arranged at one end of each of the rear leg rods close to the ground.

The second crossbar is arranged between the two rear leg rods. The backrest assembly has a third groove 106 arranged on a rear surface of the backrest assembly, so that in the first state, the second crossbar is folded in the third groove 106. In this embodiment, the second crossbar may also be stored at the back of the backrest assembly, thereby preventing interference with the backrest assembly, so that the child carrier is more closely connected to an automobile seat in a folded state, thereby occupying smaller space.

Referring to FIG. 3, FIG. 11 and FIG. 16, in some embodiments, the first unlocking member 111 is arranged on a rear surface of the backrest assembly. In this embodiment, the first unlocking member 111 may be arranged at a position convenient for a user to operate according to the actual application requirement.

Referring to FIG. 3, FIG. 11 and FIG. 16, in some embodiments, the second unlocking member 114 is arranged on a rear surface of the backrest assembly, and the second unlocking member 114 may be arranged above the first unlocking member 111. In this embodiment, the second unlocking member 114 may be arranged at a position convenient for a user to operate according to the actual application requirement.

The first cable 115, the second cable 115-2, the sixth cable 117-4, the seventh cable 117-5 and the third cable 417 may preferably be steel ropes, or ropes made of other materials.

So far, various embodiments of the present disclosure have been described in detail. In order to avoid obscuring concepts of the present disclosure, some details that are well known in the art have not been described. Those skilled in the art can fully understand how to implement the technical solutions disclosed here according to the above descriptions.

So far, various embodiments of the present disclosure have been described in detail. In order to avoid obscuring concepts of the present disclosure, some details that are well known in the art have not been described. Those skilled in the art can fully understand how to implement the technical solutions disclosed here according to the above descriptions.

## Claims

1. A child carrier, comprising:
a carrier body (1), having a backrest assembly and a seat plate;
a rear joint assembly, arranged on the carrier body (1);
a front leg assembly (3), an end of the front leg assembly (3) away from ground being rotatably connected to the seat plate;
a connecting rod assembly (4), an end of the connecting rod assembly (4) being connected to the front leg assembly (3) and another end of the connecting rod assembly (4) being connected to the rear joint assembly;
a rear leg assembly (2), connected to the rear joint assembly and rotatable relative to the connecting rod assembly (4); and
a chute assembly, arranged on the backrest assembly, the rear joint assembly being slidingly connected to the chute assembly to switch the child carrier between a first state and a second state;
wherein the backrest assembly, the seat plate and the connecting rod assembly (4) form a triangle in the first state of the child carrier; and
the seat plate, the front leg assembly (3) and the connecting rod assembly (4) form a triangle in the second state of the child carrier.

2. The child carrier according to claim 1, wherein in the first state of the child carrier, the rear joint assembly is located at an end of the chute assembly away from the ground, the front leg assembly (3) abuts against the seat plate, and the rear leg assembly (2) abuts against the backrest assembly; and
in the second state of the child carrier, the rear joint assembly is located at an end of the chute assembly close to the ground, and the front leg assembly (3) and the rear leg assembly (2) are configured to support on the ground when connected with a wheel set.

3. The child carrier according to claim 1 or 2, wherein the child carrier in the first state is a child seat so as to be mounted at an automobile seat or be in clamping connection with a separate automobile base for use; and
the child carrier in the second state is a stroller so as to be pushed on the ground.

4. The child carrier according to any one of claims 1-3, wherein the front leg assembly (3) is configured to drive the rear leg assembly (2) by the connecting rod assembly (4) to slide on the chute assembly in a process of switching the child carrier from first state to the second state .

5. The child carrier according to any one of claims 1-4, wherein the rear joint assembly has a locking member (203) and a rear joint cover (211), the locking member (203) is slidably arranged in the rear joint cover (211) in an axial direction of the rear joint cover (211), and the rear leg assembly (2) is connected to the rear joint cover (211); and the chute assembly has a first chute (101) and a second chute (102), a length direction of the first chute (101) and a length direction of the second chute (102) are intersected, and the locking member (203) and the rear joint cover (211) are respectively slidingly connected to the first chute (101) and the second chute (102).

6. The child carrier according to claim 5, wherein a distance between the first chute (101) and the second chute (102) is increased gradually in a direction away from the ground, so that the rear leg assembly (2) swings forward while moving upward along with the rear joint assembly.

7. The child carrier according to claim 5 or 6, wherein the backrest assembly has a sliding low-point mounting slot (103), which is arranged adjacent to an end of the chute assembly close to the ground; and
the child carrier further comprises:
a first locking mechanism, connected to the locking member (203) and configured to adjust a relative position of the locking member (203) and the rear joint cover (211) in the axial direction of the rear joint cover (211) so as to switch the rear joint cover (211) between a low-point locked state and a low-point unlocked state;
wherein in the low-point locked state of the rear joint cover (211), the locking member (203) is configured to limit rotation and sliding of the rear joint cover (211) relative to the carrier body (1); and
in the low-point unlocked state of the rear joint cover (211), the rear joint cover (211) is capable of rotating and/or sliding relative to the carrier body (1).

8. The child carrier according to claim 7, further comprising:
a first unlocking member (111);
wherein the first locking mechanism comprises:
a jacking block (112), having an inclined groove and abutting against the locking member (203);
a pulling block (113), connected to the first unlocking member (111) through a first cable (115) and slidingly connected to the jacking block (112) through the inclined groove; and
a first reset element (116), arranged between an end of the first cable (115) and the pulling block (113);
wherein in the low-point locked state of the rear joint cover (211), the locking member (203) is located between the sliding low-point mounting slot (103) and the rear joint cover (211) in the axial direction of the rear joint cover (211); and
the pulling block (113) is configured to move along with operation of the first unlocking member (111) to drive the jacking block (112) to push the locking member (203) to deviate from the sliding low-point mounting slot (103) in the axial direction of the rear joint cover (211) and retract into the rear joint cover (211) to unlock the rear joint cover (211).

9. The child carrier according to any one of claims 1-8, wherein the front leg assembly (3) comprises:
two front leg rods, respectively hinged to two sides of the carrier body (1), an end of the front leg rod close to the ground being connected to a front wheel group; and
a first crossbar (301), connected between the two front leg rods;
wherein the seat plate has a second groove (107), and the second groove (107) is formed at the bottom of the seat plate, so that in the first state of the child carrier, the first crossbar (301) is folded in the second groove (107).

10. The child carrier according to claim 9, further comprising:
a second locking mechanism, arranged on a groove wall of the second groove (107), so that the first crossbar (301) is switched between a locked state and an unlocked state;
wherein in the locked state of the first crossbar (301), the second locking mechanism is configured to limit the first crossbar (301) within the second groove (107); and
in the unlocked state of the first crossbar (301), the first crossbar (301) is capable of deviating from the second groove (107).

11. The child carrier according to claim 10, further comprising:
a first unlocking member (111);
wherein the second locking mechanism comprises:
a crossbar locking clamping pin (415), connected to the first unlocking member (111) through a second cable (115-2); and
a second reset element (116-2), arranged between an end of the second cable (115-2) and the crossbar locking clamping pin (415);
wherein in the locked state of the first crossbar (301), the crossbar locking clamping pin (415) extends out relative to a groove wall of the second groove (107) to limit a movement of the first crossbar (301); and
the crossbar locking clamping pin (415) is configured to retract into the groove wall of the second groove (107) along with operation of the first unlocking member (111) to unlock the first crossbar (301).

12. The child carrier according to any one of claims 9-11, wherein the first crossbar (301) has a force-bearing block, so that the force-bearing block is flush with a bottom surface of the seat plate in the first state of the child carrier.

13. The child carrier according to any one of claims 1-12, wherein the seat plate and the backrest assembly are fixedly connected or integrally formed, and the connecting rod assembly (4) is a connecting rod assembly (4) with a fixed length.

14. The child carrier according to any one of claims 1-13, wherein the seat plate and the backrest assembly are rotatably connected;
wherein the connecting rod assembly (4) has a first connecting rod (511) and a second connecting rod (512), and the second connecting rod (512) is sleeved in the first connecting rod (511) and is capable of sliding relative to the first connecting rod (511), so that a length of the connecting rod assembly (4) is adjustable.

15. The child carrier according to claim 14, wherein the child carrier further has a third state;
wherein in the third state of the child carrier, a front surface of the backrest assembly and an upper surface of the seat plate are opposite to each other, and are at an acute angle or parallel; the second connecting rod (512) retracts into the first connecting rod (511); the front leg assembly (3) abuts against the seat plate; and the rear leg assembly (2) abuts against the backrest assembly.

16. The child carrier according to claim 15, wherein the third state is a smallest folded state of the child carrier.

17. The child carrier according to any one of claims 14-16, wherein the backrest assembly has a first cavity (123), and the seat plate has a second cavity (124);
wherein the child carrier further comprises:
a third locking mechanism, slidably arranged in the first cavity (123) and the second cavity (124) and configured to switch the backrest assembly between a rotation locked state and a rotation unlocked state;
wherein in the rotation locked state of the backrest assembly, a mouth of the first cavity (123) is docked with a mouth of the second cavity (124), and the third locking mechanism is configured to limit the relative rotation of the backrest assembly and the seat plate; and
in the rotation unlocked state of the backrest assembly, the mouth of the first cavity (123) is separated from the mouth of the second cavity (124), and the backrest assembly is configured to rotate relative to the seat plate.

18. The child carrier according to claim 17, wherein the third locking mechanism comprises:
a backrest locking clamping pin (411), connected to the unlocking handle (412) through a third cable (417); and
a third reset element (418), connected between a first end of the backrest locking clamping pin (411) and a first end of the second cavity (124) away from the mouth of the second cavity (124);
wherein in the rotation locked state of the backrest assembly, a second end of the backrest locking clamping pin (411) abuts against a second end of the first cavity (123) away from the mouth of the first cavity (123), and the first end of the backrest locking clamping pin (411) is located in the second cavity (124);
wherein the child carrier further comprises:
an unlocking handle (412), arranged on the seat plate;
wherein the backrest locking clamping pin (411) is configured to move towards the first end of the second cavity (124) along with rotation of the unlocking handle (412) to deviate from the first cavity (123), so that the backrest assembly is in the rotation unlocked state.

19. The child carrier according to any one of claims 14-18, further comprising:
a fourth locking mechanism, arranged on the connecting rod assembly (4);
wherein in a locked state of the connecting rod assembly (4), the fourth locking mechanism is configured to limit a relative movement of the first connecting rod (511) and the second connecting rod (512); and
in an unlocked state of the connecting rod assembly (4), the first connecting rod (511) and the second connecting rod (512) are capable of being telescopic relatively.

20. The child carrier according to claim 19, wherein the fourth locking mechanism comprises:
a fixing seat (516), the fixing seat (516) comprising a support strip (513), where a first end of the support strip (513) has a sliding long groove, a second end of the support strip (513) has an accommodating groove, the first end of the support strip (513) is provided with a first sleeve section, the first sleeve section communicates with the sliding long groove, the second end of the support strip (513) is provided with a second sleeve section, the second sleeve section communicates with the accommodating groove, and the first sleeve section and the second sleeve section are sleeved on the first connecting rod (511);
a connecting rod clamping pin (514), arranged in the accommodating groove; and
a fourth reset element (515), arranged between the accommodating groove and the connecting rod clamping pin (514);
wherein in the locked state of the connecting rod assembly (4), the fourth reset element (515) is configured to keep the connecting rod clamping pin (514) at a locked position passing through a first through hole (501) in the first connecting rod and a second through hole (502) in the second connecting rod.

21. The child carrier according to claim 20, further comprising:
an unlocking handle (412), arranged to the seat plate;
an unlocking pulling block (413) and an unlocking jacking block (112), arranged in the seat plate, where the unlocking pulling block (413) is connected to a third cable (417) connecting the unlocking handle (412), so that the unlocking pulling block (413) is driven through rotation of the unlocking handle (412) to push the unlocking jacking block (112) to extend out; and
an unlocking strip, slidably arranged between the fixing seat (516) and the first connecting rod (511), where two ends of the unlocking strip are respectively provided with a first wedge block and a second wedge block, the first wedge block passes through the sliding long groove and abuts against the unlocking jacking block (112), and an inclined surface of the second wedge block is slidably connected to the connecting rod clamping pin (514);
wherein the unlocking jacking block (112) is configured to push the first wedge block to make the unlocking strip slide in a direction parallel to the first connecting rod (511) when extending out; the second wedge block is configured to push the connecting rod clamping pin (514) through the inclined surface to retract into the accommodating groove so as to deviate from the locked position passing through the through hole in the first connecting rod (501) and the through hole in the second connecting rod (501) when the unlocking strip slides.

22. The child carrier according to any one of claims 14-21, wherein the connecting rod assembly (4) comprises:
a damping clamping groove, arranged in the second connecting rod (512); and
a connecting rod clamping pin (514), arranged in the damping clamping groove and configured to move relative to the damping clamping groove;
wherein in the locked state of the connecting rod assembly (4), the connecting rod clamping pin (514) is embedded into the damping clamping groove and configured to limit a relative movement of the first connecting rod (511) and the second connecting rod (512); and
the connecting rod clamping pin (514) is configured to deviate from the damping clamping groove when being subjected to a preset external force, so that the first connecting rod (511) and the second connecting rod (512) are capable of being relatively telescopic.

23. The child carrier according to any one of claims 14-22, wherein the backrest assembly comprising:
a sliding high-point mounting slot (104), arranged adjacent to an end of the chute assembly away from the ground;
wherein the child carrier further comprises:
a fifth locking mechanism, movably connected to the sliding high-point mounting slot (104) to switch the rear joint cover (211) between a high-point locked state and a high-point unlocked state;
wherein in the high-point locked state of the rear joint cover (211), the fifth locking mechanism limits the rear joint cover (211) and/or the locking member (203) from sliding along the chute assembly to an end close to the ground; and
in the high-point unlocked state of the rear joint cover (211), the rear joint cover (211) and/or the locking member (203) are capable of sliding along the chute assembly.

24. The child carrier according to claim 23, further comprising:
a second unlocking member (114), where two ends of the second unlocking member (114) have inclined grooves;
wherein the fifth locking mechanism comprises:
a high-point clamping pin pulling block (122), slidably connected to the second unlocking member (114) along the inclined grooves of the second unlocking member (114); and
a high-point clamping pin (121), abutting against the high-point clamping pin pulling block (122);
wherein in the high-point locked state of the rear joint cover (211), the high-point clamping pin (121) extends out relative to the sliding high-point mounting slot (104) to limit the rear joint cover (211) and/or the locking member (203) from sliding towards a direction close to the ground; and
the high-point clamping pin pulling block (122) is configured to move along the spout with operation of the second unlocking member (114) to pull the high-point clamping pin (121) to retract into the sliding high-point mounting slot (104), so that the rear joint cover (211) and/or the locking member (203) are capable of sliding along the chute assembly.

25. The child carrier according to any one of claims 14-24, wherein a side surface of the backrest assembly is provided with a side board, a lower side of the side board is provided with a folding clamping slot (105), and a side surface of the seat plate is provided with a folding locking clamping pin (416);
wherein in a folding locked state of the backrest assembly, the folding locking clamping pin (416) is buckled in the folding clamping slot (105) to limit a relative movement of the seat plate and the backrest assembly; and
in a folding unlocked state of the backrest assembly, the folding locking clamping pin (416) deviates from the folding clamping slot (105).

26. The child carrier according to claim 25, further comprising:
a first unlocking member (111), connected to the folding locking clamping pin (416) through a sixth cable (117-4), or fixedly connected to the folding locking clamping pin (416) through a crossbar locking clamping pin (415);
wherein the folding locking clamping pin (416) is configured to deviate from the folding clamping slot (105) along with operation of the first unlocking member (111).

27. The child carrier according to any one of claims 1-14, wherein the backrest assembly has:
an adjustable backrest (7), rotatably connected to the seat plate; and
two side edge structures, respectively arranged on two sides of the adjustable backrest (7).

28. The child carrier according to claim 27, wherein the adjustable backrest (7) is adjustable relative to an angle of each of the side edge structures;
a side of each of the side edge structures close to the adjustable backrest (7) has a plurality of backrest-adjusting fixed grooves, and the plurality of backrest-adjusting fixed grooves correspond to different angles of the adjustable backrest (7); and
the adjustable backrest (7) has a backrest-adjusting pin, and the backrest-adjusting pin is configured to be inserted into one of the plurality of backrest-adjusting fixed grooves respectively to make the adjustable backrest (7) and the seat plate form different included angles.

29. The child carrier according to claim 28, further comprising:
a second unlocking member (114), connected to the backrest-adjusting pin through a seventh cable (117-5);
wherein the backrest-adjusting pin is configured to deviate from the backrest-adjusting fixed grooves along with operation of the second unlocking member (114).

30. The child carrier according to any one of claims 1-29, further comprising:
a handle headrest assembly, having a headrest and a sliding rod, where the headrest is connected to the sliding rod, the sliding rod is inserted into the backrest assembly, and a relative distance of the headrest and the backrest assembly is adjustable.

31. The child carrier according to claim 30, further comprising:
a first handle, rotatably connected to a rear surface of the headrest.

32. The child carrier according to any one of claims 1-31, wherein the rear leg assembly (2) has two rear leg rods, respectively arranged on two sides of the carrier body (1), and an end of the rear leg assembly (2) close to the ground is connected to a rear wheel group; and
a second crossbar, arranged between the two rear leg rods;
wherein the backrest assembly has a third groove (106) formed on a rear surface of the backrest assembly, so that the second crossbar is folded in the third groove (106) in the first state of the child carrier.

33. The child carrier according to claim 8, 11, or 26, wherein the first unlocking member (111) is arranged on a rear surface of the backrest assembly.

34. The child carrier according to claim 24 or 29, wherein a second unlocking member (114) is arranged on a rear surface of the backrest assembly.
